# EUROPÄISCHE PATENTSCHRIFT

(11) **EP 4 061 678 B1**
(45) Veröffentlichungstag und Bekanntmachung des Hinweises auf die Patenterteilung: **02.08.2023**
(21) Anmeldenummer: 20800866.4
(22) Anmeldetag: 02.11.2020
(51) Int. Cl.: B60T 13/66, B60T 13/68, B60T 17/22

(54) **BREMSSYSTEM MIT SICHERER NOTSTOPPFUNKTION UND VERFAHREN HIERZU**
BRAKE SYSTEM WITH SAFER EMERGENCY STOP FUNCTION AND METHOD FOR SAME
SYSTÈME DE FREIN DOTÉ D'UNE FONCTION D'ARRÊT D'URGENCE PLUS SÛR ET PROCÉDÉ ASSOCIÉ

(30) Priorität: 18.11.2019 DE 102019131110
(43) Veröffentlichungstag der Anmeldung: 28.09.2022
(73) Patentinhaber: ZF CV Systems Europe BV, 1170 Brüssel (BE)
(72) Erfinder: VAN THIEL, Julian, 30938 Grossburgwedel (DE)
(74) Vertreter: Rabe, Dirk-Heinrich
(86) Internationale Anmeldenummer: PCT/EP2020/080637
(87) Internationale Veröffentlichungsnummer: WO 2021/099097

(56) Entgegenhaltungen:
- WO-A1-2008/025400
- CN-A- 109 677 382
- DE-A1-102005 060 225
- DE-A1-102007 047 691

## Beschreibung

Die Erfindung betrifft ein Verfahren zum sicheren Notstoppen eines Fahrzeugs, insbesondere Nutzfahrzeugs, mit einem elektronisch steuerbaren pneumatischen Bremssystem mit Federspeicherbremszylindern an wenigstens einer Achse, wobei das elektronisch steuerbare pneumatische Bremssystem ein Betriebsbremssystem und wenigstens ein erstes Redundanzsystem aufweist, wobei im Falle eines ersten Fehlers in dem Betriebsbremssystem das Fahrzeug durch das Redundanzsystem gebremst wird.

Die Erfindung betrifft ferner eine elektropneumatische Feststellbremseinheit, vorzugsweise elektropneumatisches Feststellbremsmodul, zur Verwendung in einem Verfahren der vorstehend genannten Art zum automatisierten gedrosselten Entlüften wenigstens eines Federspeicherbremszylinders in einem Fehlerfall, aufweisend einen Vorratsanschluss zum Empfangen von Vorratsdruck, einen Federspeicheranschluss zum Anschließen wenigstens eines Federspeicherbremszylinders, eine Vorsteuereinheit zum Bereitstellen eines ersten Steuerdrucks, die einen mit dem Vorratsanschluss verbundenen und Vorratsdruck empfangenden Vorsteuer-Belüftungspfad und einen mit einem Entlüftungsanschluss verbundenen Vorsteuer-Entlüftungspfad aufweist, und eine den ersten Steuerdruck empfangende Hauptventileinheit, die dazu ausgebildet ist, in Abhängigkeit von dem empfangenen ersten Steuerdruck, einen Federspeicherbremsdruck an dem Federspeicheranschluss bereitzustellen. Die Erfindung betrifft ferner ein Fahrzeug, insbesondere Nutzfahrzeug.

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Tritt jedoch beispielsweise ein Doppelfehler auf, der sowohl das primäre Bremssystem als auch das redundante Bremssystem betrifft, besteht Gefahr, dass das Nutzfahrzeug nicht mehr kontrolliert gebremst werden kann. Für solche Fälle besteht Bedarf, ein System bereitzustellen, das ein sicheres Verzögern des Fahrzeugs zulässt.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Brems- und Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller umfasst, und eine Betriebsbremseinrichtung. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigsten einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung im Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachsbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart.

Aus DE10 2005 060 225 A1 ist eine elektropneumatische Bremssteuerungseinrichtung zur Steuerung einer Feststellbremse eines Fahrzeugs bekannt, bei dem druckluftbetätigbare Bremszylinder zur Betätigung von Radbremsen vorgesehen sind, wobei wenigstens ein Bremszylinder als Federspeicherbremszylinder ausgebildet ist und der Federspeicherteil des Federspeicherbremszylinders die Feststellbremse betätigt, wobei die Bremssteuerungseinrichtung Ventileinrichtungen aufweist, mittels der die Bremssteuerungseinrichtung in mehrere Betriebszustände bringbar ist, wobei a) in einem ersten Betriebszustand die Ventileinrichtungen zumindest teilweise bestrombar und derart schaltbar sind, dass eine Druckluftleitung zum Federspeicherteil des Federspeicherbremszylinders belüftbar ist und b) in einem zweiten Betriebszustand die Ventileinrichtungen zumindest teilweise bestrombar und somit derart schaltbar sind, dass diese Druckluftleitung zum Federspeicherteil des Federspeicherbremszylinders schlagartig entlüftbar ist, wobei c) in einem dritten, bei Ausfall der elektrischen Energieversorgung der Bremssteuerungseinrichtung aktivierbaren Betriebszustand die Ventileinrichtungen unbestromt derart schaltbar sind, dass die Druckluftleitung zum Federspeicherteil des Federspeicherbremszylinders automatisch gedrosselt entlüftbar ist.

Die vorliegende Erfindung zielt darauf ab, ein System bereitzustellen, welches auch dann noch ein sicheres Stoppen des Fahrzeugs ermöglicht, wenn redundante Systeme, Teilsysteme oder Ebenen des Bremssystems ausgefallen sind. Wird beispielsweise ein Bremssystem über mehrere Stromquellen versorgt, kann es im schlimmsten Fall dazu kommen, dass sämtliche Stromquellen versagen. Auch in diesem Fall soll auf einfache Art und Weise sichergestellt werden, dass das Fahrzeug sicher verzögert werden kann.

Diese Aufgabe wird bei einem Verfahren der eingangs genannten Art bei einem Bremssystem, das ferner einen ungedrosselten Entlüftungspfad und einen gegenüber diesem gedrosselten Entlüftungspfad zum Entlüften der Federspeicherbremszylinder aufweist, dadurch gelöst, dass das Verfahren die Schritte aufweist: Ermitteln eines zweiten Fehlers in dem Redundanzsystem und in Antwort auf das Ermitteln des zweiten Fehlers: Automatisiertes gedrosseltes
Entlüften von wenigstens einem der Federspeicherbremszylinder über den gedrosselten Entlüftungspfad zum langsamen, sicheren Stoppen des Fahrzeugs. Während also erfindungsgemäß vorgesehen ist, dass bei Auftritt eines ersten Fehlers, der das Betriebsbremssystem betrifft, das Redundanzsystem die Steuerung des Fahrzeugs übernimmt, ist vorgesehen, dass auch bei Ausfall des Redundanzsystems, also bei Auftritt des zweiten Fehlers, das Fahrzeug gestoppt wird, indem wenigstens einer, vorzugsweise alle Federspeicherbremszylinder gedrosselt entlüftet werden.

Der ungedrosselte Entlüftungspfad weist vorzugsweise einen ersten Querschnitt mit einem maximalen Volumenstrom A auf, und der gedrosselte Pfad hat einen zweiten Querschnitt mit einem maximalen Volumenstrom B, welcher um einen Faktor C kleiner ist als der erste Volumenstrom A. Der Faktor C ist abhängig von der Auslegung des Bremssystems und auch des Fahrzeugs, ist aber vorzugsweise in einem Bereich von 100 bis 10,000. Bevorzugt beträgt die Nennweite des ungedrosselten Entlüftungspfads etwa die 10 bis 100-fache Nennweite des gedrosselten Entlüftungspfads. a

Der gedrosselte und der ungedrosselte Entlüftungspfad können an jedem Ort in dem elektronisch steuerbaren pneumatischen Bremssystem untergebracht sein, solange über diese wenigstens einer der Federspeicherbremszylinder entlüftet werden kann. Das Betriebsbremssystem und das Redundanzsystem können teilweise gemeinsame Komponenten umfassen, wie insbesondere Ventile und Bremsaktuatoren. Beispielsweise ist denkbar, dass sich das Betriebsbremssystem und das Redundanzsystem lediglich durch getrennte elektronische Steuereinheiten unterscheiden, die sich gegenseitig wenigstens teilweise ersetzen können. Vorzugsweise werden das Betriebsbremssystem und das Redundanzbremssystem jeweils über eine eigene Spannungsversorgung mit Energie versorgt.

In einer bevorzugten Weiterbildung umfasst das automatisierte gedrosselte Entlüften ein Stromlosschalten von wenigstens einem monostabilen Ventil. Wird ein monostabiles Ventil stromlos geschaltet, fällt es in den stabilen Zustand zurück.

Auf diese Weise kann ein monostabiles Ventil besonders einfach mit einer Steuereinheit gekoppelt werden, und bei einem Fehler der Steuereinheit oder einem Stromausfall empfängt das monostabile Ventil kein Signal mehr, wird somit stromlos geschaltet und fällt in den stabilen Zustand zurück. Dieses Zurückfallen in den stabilen Zustand kann mittelbar oder unmittelbar zur gedrosselten Entlüftung des wenigstens einen Federspeicherbremszylinders genutzt werden. Hierdurch kann auch die Sicherheit verbessert werden. Das Schalten des monostabilen Ventils in den stabilen Zustand erfordert kein aktives Bereitstellen eines Signals durch eine Steuereinheit, sondern geschieht allein aufgrund des Wegfalls der Spannung an dem monostabilen Ventil.

Weiterhin ist bevorzugt, dass das Betriebsbremssystem des elektronisch steuerbaren pneumatischen Bremssystems mittels eines Zentralmoduls und das Redundanzsystem des elektronisch steuerbaren pneumatischen Bremssystems mittels einer Feststellbremseinheit, welche pneumatisch mit den Federspeicherbremszylindern verbunden ist, gesteuert wird. Sowohl das Zentralmodul als auch die Feststellbremseinheit weisen in dieser Ausführungsform vorzugsweise elektronische Steuereinheiten auf, die dazu ausgebildet sind, über einen Fahrzeugbus oder auf andere Weise mit einem Bremswertgeber, beispielsweise einem manuell betätigbaren Bremswertgeber und/oder einer Einheit für autonomes Fahren, Signale zu empfangen und diese dann in dem Bremssystem so zu verteilen, dass entsprechende Bremsaktuatoren an Rädern des Fahrzeugs angesteuert werden. Die elektronische Steuereinheit der Feststellbremseinheit kann in dieser Ausführungsform wenigstens teilweise die elektronische Steuereinheit des Zentralmoduls ersetzen. Fällt das Zentralmodul aufgrund eines Fehlers aus, übernimmt die Feststellbremseinheit die Steuerung des elektronisch steuerbaren pneumatischen Bremssystems. Fällt auch die Feststellbremseinheit aus, wird der wenigstens eine Federspeicherbremszylinder automatisiert gedrosselt entlüftet. Dass das Redundanzsystem durch die Feststellbremseinheit gebildet wird, ist besonders bevorzugt, da diese auch im Normalbetrieb des Bremssystems zum Be- und Entlüften von Federspeicherbremszylindern ausgebildet und vorgesehen ist, sodass diese auf besonders einfache Art und Weise so ausgelegt werden kann, dass im Falle eines Doppelfehlers der wenigstens eine Federspeicherbremszylinder automatisiert gedrosselt entlüftet wird, vorzugsweise mittels der Feststellbremseinheit. Die Feststellbremseinheit weist vorzugsweise ein Feststellbremsmodul auf oder ist als ein solches ausgebildet.

Vorzugsweise ist ferner vorgesehen, dass in einem Betriebsfall, in dem kein Fehler vorliegt, die Feststellbremseinheit die Federspeicherbremszylinder zum Lösen belüftet, in einem ersten Redundanzfall, wenn in dem Betriebsbremssystem ein erster Fehler vorliegt, die Feststellbremseinheit die Steuerung des elektronisch steuerbaren pneumatischen Bremssystems übernimmt, und in einem Mehrfachfehlerfall, wenn in dem Betriebsbremssystem ein erster Fehler und in dem ersten Redundanzsystem ein zweiter Fehler vorliegt, die Federspeicherbremszylinder automatisiert gedrosselt entlüftet werden. Vorzugsweise werden die Federspeicherbremszylinder mittels des Feststellbremsmoduls oder einer weiteren Einheit oder einer Feststellbremseinheit, die das Feststellbremsmodul umfassen kann, entlüftet.

Für den Fall, dass das elektronisch steuerbare pneumatische Bremssystem ein zweites Redundanzsystem aufweist, welches dann eingreift, wenn das erste Redundanzsystem einen Fehler hat, ist vorzugsweise vorgesehen, dass das automatisierte gedrosselte Entlüften der Federspeicherbremszylinder erst dann ausgeführt wird, wenn auch das zweite Redundanzsystem einen Fehler hat. In diesem Fall greift das automatisierte gedrosselte Entlüften erst als dritte Rückfallebene, nämlich, wenn das Betriebsbremssystem ausfällt, das erste Redundanzsystem ausfällt und das zweite Redundanzsystem ausfällt. Erst dann werden vorzugsweise die Federspeicherbremszylinder automatisiert gedrosselt entlüftet.

In einer bevorzugten Weiterbildung ist vorgesehen, dass für den Fall, dass zuerst der zweite Fehler in dem ersten Redundanzsystem auftritt und infolge dessen die Feststellbremseinheit ein oder mehrere monostabile Ventile stromlos schaltet, sodass die Federspeicherbremszylinder entlüftet werden, eine weitere Einheit, vorzugsweise das Zentralmodul, eine Belüftung der Federspeicherbremszylinder veranlasst. Die weitere Einheit kann eine andere, beliebige Einheit des elektronisch steuerbaren pneumatischen Bremssystems sein. Insbesondere bietet sich für den beschriebenen Fall das Zentralmodul an, da in dem beschriebenen Fall kein Fehler aufgetreten ist, sondern zuerst der zweite Fehler auftritt und der erste Fehler noch nicht aufgetreten ist. Das Zentralmodul kann also dazu ausgebildet sein, solange der erste Fehler nicht aufgetreten ist, die Federspeicherbremszylinder zu belüften, unabhängig davon, ob ein zweiter Fehler aufgetreten ist und unabhängig davon, ob die Feststellbremseinheit veranlasst wird, die Federspeicherbremszylinder zu entlüften. Auf diese Weise kann sichergestellt werden, dass, während das Betriebsbremssystem das Fahrzeug steuert, und ein Fehler im Redundanzsystem auftritt, das Fahrzeug nicht automatisch gestoppt wird, sondern weiterhin betrieben werden kann.

Vorzugsweise erfolgt das Belüften der Federspeicherbremszylinder mittels der weiteren Einheit über einen Löseanschluss an der Feststellbremseinheit. Dieser Löseanschluss kann beispielsweise als Anti-Compound-Anschluss ausgebildet sein. Zu diesem Zweck kann die weitere Einheit, insbesondere das Zentralmodul, ein oder mehrere schaltbare Ventile aufweisen, die, solange das Betriebsbremssystem fehlerfrei arbeitet, bestromt sind und infolge dessen einen Druck aussteuern, der dann unmittelbar oder mittelbar an Federspeicherbremszylindern bereitgestellt wird, um diese zu belüften.

Das Verfahren weist ferner vorzugsweise den Schritt auf: Einstellen eines Drosselungsgrads des gedrosselten Entlüftungspfads, während das elektronisch steuerbare pneumatische Bremssystem von dem Betriebsbremssystem gesteuert wird. Der Drosselungsgrad kann vorzugsweise in Abhängigkeit von über einen Fahrzeugbus und/oder von dem elektronisch steuerbaren pneumatischen Bremssystem bereitgestellten Daten und/oder in Abhängigkeit von einem Fahrzeugtyp, einem Beladungszustand, einer Achslast, einer Fahrzeugmasse oder einer Bremsverteilung erfolgen. Der Drosselungsgrad sollte so eingestellt sein, dass das Fahrzeug rasch, aber sicher gebremst wird. Ist beispielsweise die Beladung des Fahrzeugs relativ hoch, kann eine geringere Drosselung vorgesehen sein, als wenn der Beladungszustand des Fahrzeugs relativ niedrig ist. In diesem Fall würde ein zu geringer Drosselungsgrad dazu führen, dass die Räder des Fahrzeugs zum Blockieren neigen würden. Ähnliches gilt für Achslast, Fahrzeugmasse, Bremsverteilung und Fahrzeugtyp. Andere Daten, die über den Fahrzeugbus bereitgestellt werden können, sind beispielsweise unmittelbar Stellsignale zum Einstellen des Drosselungsgrads, aber auch Daten betreffend eine Fahrbahn, Daten aus einem Navigationssystem, aus dem beispielsweise ein möglicher Bremsweg abgeleitet werden kann, Daten aus voraus- oder hinterherfahrenden Fahrzeugen, Daten aus anderen Systemen, die einen potentiellen Ausfall des Systems anzeigen. Der Drosselungsgrad kann insbesondere durch Verringerung oder Vergrößerung der Nennweite bzw. des Querschnitts des gedrosselten Entlüftungspfads erfolgen.

In einem zweiten Aspekt der Erfindung wird die eingangs genannte Aufgabe bei einer elektropneumatischen Feststellbremseinheit der eingangs genannten Art dadurch gelöst, dass eine monostabile Drosselanordnung vorgesehen ist, die bestromt in einer ersten Schaltstellung gehalten wird, die eine ungedrosselte Entlüftung des Federspeicheranschlusses über einen ungedrosselten Entlüftungspfad erlaubt, und stromlos in eine zweite Schaltstellung fällt, die eine gedrosselte Entlüftung des Federspeicheranschlusses über einen gedrosselten Entlüftungspfad erlaubt. Die monostabile Drosselanordnung schaltet folglich zwischen dem ungedrosselten und dem gedrosselten Entlüftungspfad hin und her und verbindet den Federspeicheranschluss je nach Zustand des elektronisch steuerbaren pneumatischen Bremssystems entweder mit dem ungedrosselten Entlüftungspfad oder dem gedrosselten Entlüftungspfad.

Es soll verstanden werden, dass das Verfahren gemäß dem ersten Aspekt der Erfindung sowie die elektropneumatische Feststellbremseinheit gemäß dem zweiten Aspekt der Erfindung gleiche und ähnliche Unteraspekte aufweisen, wie sie insbesondere in den abhängigen Ansprüchen niedergelegt sind. Insofern wird insbesondere für weitere Merkmale und deren Vorteile auch auf die obige Beschreibung vollumfänglich Bezug genommen.

Bevorzugt ist die Drosselanordnung in dem Vorsteuer-Entlüftungspfad angeordnet. Der Vorsteuer-Entlüftungspfad der Vorsteuereinheit der elektropneumatischen Feststellbremseinheit dient dazu, den Federspeicheranschluss der elektropneumatischen Feststellbremseinheit zu entlüften. Daher ist es bevorzugt, die Drosselanordnung auch in diesem Pfad unterzubringen. Es kann allerdings vorgesehen sein, dass die Drosselanordnung nicht von einer elektronischen Steuereinheit der elektropneumatischen Feststellbremseinheit gesteuert wird, sondern von einer anderen, übergeordneten Einheit. Die Vorsteuereinheit der elektropneumatischen Feststellbremseinheit kann monostabil oder bistabil ausgelegt sein.

In einer bevorzugten Weiterbildung weist die Drosselanordnung ein erstes monostabiles Drosselventil auf, welches in der ersten Schaltstellung der Drosselanordnung offen ist und in der zweiten Schaltstellung der Drosselanordnung gedrosselt offen ist. Auf diese Weise lässt das erste monostabile Drosselventil in der ersten Schaltstellung eine Be- und Entlüftung des Federspeicheranschlusses ohne weitere Einschränkungen zu, insbesondere ungedrosselt. Erst wenn das erste monostabile Drosselventil in die zweite Schaltstellung fällt, insbesondere, weil es stromlos geschaltet wird, insbesondere aufgrund eines zweiten Fehlers in dem Redundanzsystem, ist es nur noch gedrosselt offen, sodass die Entlüftung des Federspeicheranschlusses gedrosselt erfolgt. Dies ist eine besonders einfache Möglichkeit, den Erfindungsgedanken umzusetzen und in einem Fehlerfall, insbesondere Doppelfehlerfall, den Federspeicheranschluss und damit den oder die daran angeschlossenen Federspeicherbremszylinder gedrosselt zu entlüften.

Weiterhin ist bevorzugt, dass das erste monostabile Drosselventil als 2/2-Wege-Drosselventil oder als 3/2-Wege-Drosselventil ausgebildet ist. Für den Fall eines 3/2-Wege-Drosselventils können beispielsweise die zwei wechselseitig mit dem dritten Anschluss verbindbaren Anschlüsse zu zwei verschiedenen Leitungen führen, von denen eine Leitung eine Drossel aufweist und die andere Leitung ungedrosselt ist. Für den Fall eines 2/2-Wege-Drosselventils kann vorgesehen sein, dass das Drosselventil in sich eine Drossel aufweist, die in der zweiten Schaltstellung zwischen die beiden Anschlüsse des 2/2-Wege-Drosselventils geschaltet wird.

Besonders bevorzugt weist die Drosselanordnung eine einstellbare Drossel auf, welche mittels eines elektronischen Drosselsignals einstellbar ist. Beispielsweise ist hier ein Stellmotor vorgesehen, der einen Querschnitt der gedrosselten Entlüftungsleitung verändern kann, um so einen Drosselungsgrad einzustellen. Das Drosselsignal wird vorzugsweise von einer übergeordneten Einheit, insbesondere einem Zentralmodul des elektronisch steuerbaren Bremssystems, bereitgestellt, vorzugsweise ein Zentralmodul, das auch ein Betriebsbremssystem steuert. Auch andere Möglichkeiten, eine Drossel einstellbar auszubilden, sind umfasst und bevorzugt.

In einer bevorzugten Weiterbildung weist die elektropneumatische Feststellbremseinheit einen Löseanschluss zum Einsteuern eines Lösedrucks auf, wobei der Löseanschluss mit der Hauptventileinheit der elektropneumatischen Feststellbremseinheit verbunden ist und wobei die Hauptventileinheit dazu ausgebildet ist, in Abhängigkeit von dem empfangenen Lösedruck einen Federspeicherbremsdruck an dem Federspeicheranschluss bereitzustellen. Die Hauptventileinheit der elektropneumatischen Feststellbremseinheit empfängt auf diese Weise also sowohl einen Steuerdruck von der Vorsteuereinheit, als auch den Lösedruck als Steuerdruck, um basierend auf entweder dem Lösedruck oder dem von der Vorsteuereinheit ausgesteuerten Steuerdruck den Federspeicherbremsdruck auszusteuern. Für den Fall, dass die Vorsteuereinheit der elektropneumatischen Feststellbremseinheit nicht oder nicht richtig funktioniert, beispielsweise, weil ein zweiter Fehler in dem Redundanzsystem aufgetreten ist, kann auf diese Weise der Lösedruck bereitgestellt werden und die Hauptventileinheit kann diesen Lösedruck verarbeiten, um so den Federspeicherbremsdruck auszusteuern, um die Federspeicherbremszylinder zu lösen.

Bevorzugt ist zwischen dem Löseanschluss und der Hauptventileinheit ein Wechselventil angeordnet. Das Wechselventil dient dann dazu, eine Schnittstelle auch zur Vorsteuereinheit zu bilden. Das erste Wechselventil empfängt vorzugsweise den Lösedruck und einen weiteren Druck, wie beispielsweise den Vorratsdruck oder den ersten Steuerdruck der Vorsteuereinheit, und steuert den höheren des Lösedrucks und des weiteren Drucks an die Hauptventileinheit aus. Das erste Wechselventil kann der Vorsteuereinheit vor- oder nachgeschaltet sein. Wenn es den ersten Steuerdruck empfängt, ist es der Vorsteuereinheit nachgeschaltet. Hierdurch wird eine Übersteuerung an der Hauptventileinheit vermieden.

Weiter ist bevorzugt, dass die elektropneumatische Feststellbremseinheit eine elektronische Steuereinheit zum Bereitstellen von Schaltsignalen aufweist, wenigstens für die Vorsteuereinheit und die Drosselanordnung. In diesem Ausführungsbespiel wird die Drosselanordnung folglich von der elektronischen Steuereinheit der elektropneumatischen Feststellbremseinheit gesteuert, sodass die Drosselanordnung stromlos geschaltet wird und in den stabilen Zustand zurückfällt, wenn die elektronische Steuereinheit der elektropneumatischen Feststellbremseinheit ausfällt. Die elektropneumatische Feststellbremseinheit ist vorzugsweise auch dazu vorgesehen, das Redundanzsystem zu steuern, sodass im Falle des zweiten Fehlers die elektronische Steuereinheit der elektropneumatischen Feststellbremseinheit ausfällt und die Drosselanordnung stromlos geschaltet wird.

In einer weiteren bevorzugten Ausführungsform umfasst die elektropneumatische Feststellbremseinheit ein elektronisch schaltbares Löseventil zum elektronischen Aussteuern eines elektronisch ausgesteuerten Lösedrucks an der Hauptventileinheit, wobei das Löseventil von einer externen elektronischen Steuereinheit gesteuert wird, die unabhängig von der elektronischen Steuereinheit ist. Die externe elektronische Steuereinheit ist extern zu der elektropneumatischen Feststellbremseinheit und kann beispielsweise eine elektronische Steuereinheit eines Zentralmoduls, eines Achsmodulators, eines übergeordneten Steuermoduls, einer Einheit für autonomes Fahren oder dergleichen sein. Auch ist es denkbar und bevorzugt, dass die externe elektronische Steuereinheit genau zu diesem Zweck vorgesehen ist. Sie kann an der elektropneumatischen Feststellbremseinheit angeordnet sein, in bevorzugten Fällen sogar innerhalb eines Moduls, in das die elektropneumatische Feststellbremseinheit integriert ist, ist aber unabhängig von der elektronischen Steuereinheit, und zwar insbesondere von einer unabhängigen Energiequelle versorgt. Das Löseventil dient dazu, den elektronisch ausgesteuerten Lösedruck an der Hauptventileinheit bereitzustellen. Der elektronisch ausgesteuerte Lösedruck kann die gleiche Funktion haben wie der zuvor beschriebene Lösedruck und dient dazu, den Federspeicherbremsdruck auszusteuern. Insofern ist die Hauptventileinheit dazu ausgebildet, in Abhängigkeit von dem Empfang des elektronisch ausgesteuerten Lösedrucks den Federspeicherbremsdruck auszusteuern. Auf diese Weise ist es möglich und bevorzugt, dass nicht von einer anderen Einheit der Lösedruck bereitgestellt werden muss. Vielmehr kann der Lösedruck als elektronisch ausgesteuerter Lösedruck direkt von dem elektronisch schaltbaren Löseventil bereitgestellt werden. Das elektronisch schaltbare Löseventil ist dazu vorzugsweise mit einem oder mit mehreren Vorratsdruckbehältern verbunden. Ferner kann das Löseventil dem Löseanschluss vor- oder nachgeschaltet sein. Auf diese Weise ist es auch möglich, dass das Löseventil dazu eingesetzt wird, den Löseanschluss der elektropneumatischen Feststellbremseinheit zu sperren.

In einer weiteren bevorzugten Ausführungsform sind das erste monostabile Drosselventil und das Löseventil in einem Kombiventil integriert. Das Kombiventil ist vorzugsweise als 3/2-Wege-Ventil ausgebildet. Auf diese Weise kann das Kombiventil beispielsweise in einer ersten Schaltstellung eine ungedrosselte Entlüftung erlauben, aber gleichzeitig auch eine ungedrosselte Belüftung, in der zweiten Schaltstellung eine gedrosselte Entlüftung. Hierdurch kann insgesamt ein Ventil gespart werden, wodurch Bauraum und Kosten reduziert werden können.

Gemäß einer bevorzugten Weiterbildung weist die Drosselanordnung ein zweites monostabiles Drosselventil auf, welches mit dem ersten monostabilen Drosselventil zur automatischen gedrosselten Entlüftung des Federspeicheranschlusses zusammenwirkt. Hierbei ist vorzugsweise eine gedrosselte Entlüftung des Federspeicheranschlusses mittels der Drosselanordnung nur dann möglich, wenn das erste und das zweite monostabile Drosselventil stromlos sind. Hierdurch kann eine Redundanz eingeführt werden. Erst wenn beide Drosselventile stromlos geschaltet werden, wird der Federspeicheranschluss entlüftet. Ein Einfachfehler an einem Drosselventil führt also nicht direkt zu einer Entlüftung des Federspeicheranschlusses, sodass hier die Stabilität und Sicherheit des Fahrzeugs verbessert sein kann.

In einer bevorzugten Ausführungsform wird auch das zweite monostabile Drosselventil von der elektronischen Steuereinheit der elektropneumatischen Feststellbremseinheit gesteuert. Auf diese Weise können wirksam Einzelfehler an einem der Drosselventile ohne Folge für das Fahrzeug bleiben.

Besonders bevorzugt sind die Vorsteuereinheit, die Hauptventileinheit und die elektronische Steuereinheit gemeinsam in ein Feststellbremsmodul integriert. Hierdurch können Montage- und Bauraumvorteile erzielt werden.

In einem dritten Aspekt wird die eingangs genannte Aufgabe bei einem elektronisch steuerbaren pneumatischen Bremssystem der eingangs genannten Art mit Federspeicherbremszylindern an wenigstens einer Achse eines Fahrzeugs, insbesondere ein Nutzfahrzeug, wobei das elektronisch steuerbare pneumatische Bremssystem ein Betriebsbremssystem und wenigstens ein erstes Redundanzsystem aufweist, und wobei im Falle eines ersten Fehlers in dem Betriebsbremssystem das Fahrzeug durch das Redundanzsystem gebremst wird, dadurch gelöst, dass eine elektropneumatische Feststellbremseinheit nach einer der vorstehend beschriebenen bevorzugten Ausführungsformen einer elektropneumatischen Feststellbremseinheit gemäß dem zweiten Aspekt der Erfindung vorgesehen ist. Die elektropneumatische Feststellbremseinheit ist vorzugsweise so in dem Bremssystem angeordnet, dass die elektronische Steuereinheit der elektropneumatischen Feststellbremseinheit die Steuereinheit des Redundanzsystems bildet, das für den Fall, dass das Betriebsbremssystem ausfällt, die Steuerung des Bremssystems übernimmt.

Vorzugsweise ist ferner vorgesehen, dass der Löseanschluss der elektropneumatischen Feststellbremseinheit mit einem Vorderachsbremskreis und/oder einem Hinterachsbremskreis des Bremssystems verbunden ist. Auf diese Weise soll erreicht werden, dass, für den Fall, dass der Vorderachs- und/oder Hinterachsbremskreis korrekt funktioniert, ein Lösedruck bereitgestellt wird, um den Federspeicheranschluss zu belüften. Erst wenn der Vorderachsbremskreis und/oder Hinterachsbremskreis ausfällt und entsprechend kein Lösedruck bereitgestellt wird, werden die Federspeicherbremszylinder entlüftet und somit zugespannt.

In einem vierten Aspekt der Erfindung wird die eingangs genannte Aufgabe gelöst durch ein Fahrzeug, insbesondere ein Nutzfahrzeug, mit einem elektronisch steuerbaren pneumatischen Bremssystem gemäß dem dritten Aspekt der Erfindung.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein schematisches Layout eines elektronisch steuerbaren pneumatischen Bremssystems;
- Fig. 2: ein erstes Ausführungsbeispiel einer elektropneumatischen Feststellbremseinheit;
- Fig. 3: ein zweites Ausführungsbeispiel einer elektropneumatischen Feststellbremseinheit;
- Fig. 4: ein drittes Ausführungsbeispiel einer elektropneumatischen Feststellbremseinheit;
- Fig. 5: ein viertes Ausführungsbeispiel einer elektropneumatischen Feststellbremseinheit;
- Fig. 6: ein fünftes Ausführungsbeispiel einer elektropneumatischen Feststellbremseinheit;
- Fig. 7: ein sechstes Ausführungsbeispiel einer elektropneumatischen Feststellbremseinheit;
- Fig. 8: ein siebtes Ausführungsbeispiel einer elektropneumatischen Feststellbremseinheit;
- Fig. 9: ein achtes Ausführungsbeispiel einer elektropneumatischen Feststellbremseinheit; und
- Fig. 10: ein neuntes Ausführungsbeispiel einer elektropneumatischen Feststellbremseinheit.

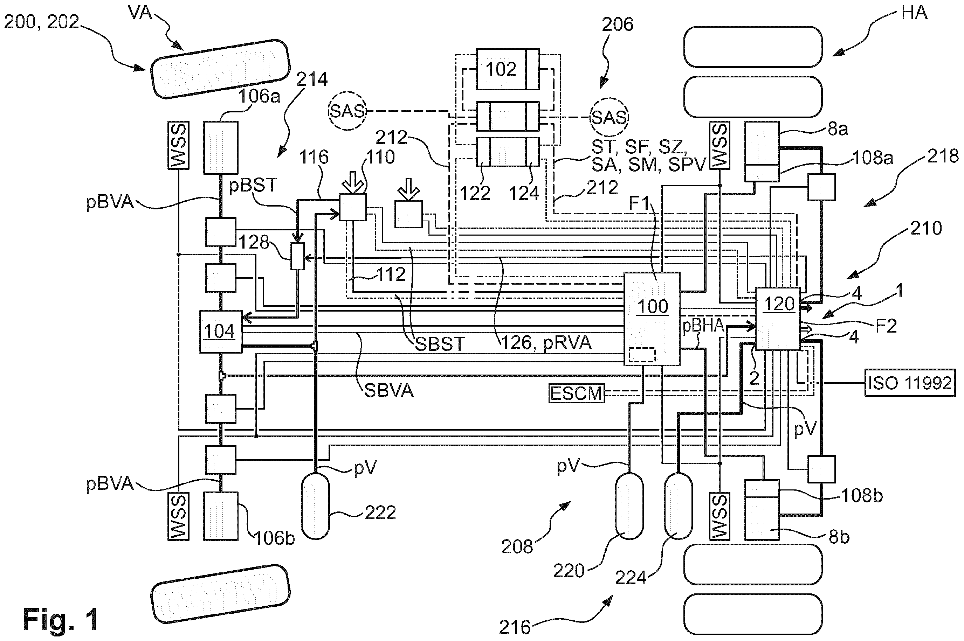

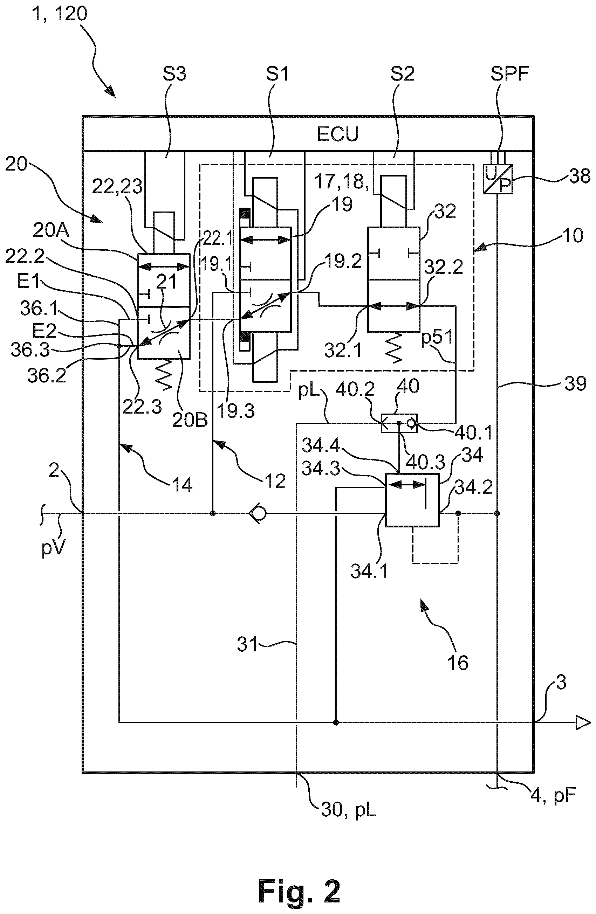

Zunächst wird anhand von Fig. 1, in welcher ein Fahrzeug 200, insbesondere Nutzfahrzeug 202, schematisch gezeigt ist, die Funktion eines elektronisch steuerbaren pneumatischen Bremssystems 206 gemäß einem Aspekt der Erfindung beschrieben, um anschließend daran Bezug auf die Fig. 2 bis 10 einzelne Ausführungsbeispiele einer elektropneumatischen Feststellbremseinheit 1 zu beschreiben, die vorzugsweise im elektronisch steuerbaren pneumatischen Bremssystem 206 gemäß Fig. 1 eingesetzt wird, auch wenn sie hierauf nicht beschränkt ist.

Das elektronisch steuerbare pneumatische Bremssystem 206 weist ein Betriebsbremssystem 208 und ein Redundanzsystem 210 auf. Das Betriebsbremssystem 208 dient dazu, das elektronisch steuerbare pneumatische Bremssystem 206 in einem Normalbetrieb des Fahrzeugs 200, wenn noch kein Fehler F1, F2 aufgetreten ist, zu steuern. Das Redundanzsystem 210 übernimmt die Steuerung des elektronisch steuerbaren pneumatischen Bremssystems 206 für den Fall, dass in dem Betriebsbremssystem 208 ein erster Fehler F1 auftritt.

Im Detail weist das elektronisch steuerbare pneumatische Bremssystem 206 einen Vorderachsbremskreis 214 für eine Vorderachse VA und einen Hinterachsbremskreis 216 für eine Hinterachse HA auf. Darüber hinaus weist das elektronisch steuerbare pneumatische Bremssystem 206 einen Parkbremskreis 218 auf, der auch zum Versorgen eines hier nicht gezeigten Anhängers vorgesehen ist. Der Hinterachsbremskreis 216 wird von einem ersten Druckluftvorrat 220, der Vorderachsbremskreis 214 von einem zweiten Druckluftvorrat 222 und der Parkbremskreis 218 von einem dritten Druckluftvorrat 224 versorgt. Alle drei Druckluftvorräte 220, 222, 224 stellen einen Vorratsdruck pV bereit. In einem Betriebsfall des Fahrzeugs 200 wird das gesamte elektronisch steuerbare pneumatische Bremssystem 206 von einem Zentralmodul 100 gesteuert. Zu diesem Zweck ist das Zentralmodul 100 über einen Fahrzeugbus 212 mit einer Einheit für autonomes Fahren 102 verbunden, um von dieser Bremsanforderungssignale XBR zu empfangen. Zum Steuern des Vorderachsbremskreises 214 ist das Zentralmodul 100 mit einem Vorderachsmodulator 104 verbunden, der seinerseits Vorratsdruck pV von dem zweiten Druckluftvorrat 222 empfängt. Der Vorderachsmodulator 104 ist hier nicht weiter im Detail dargestellt, umfasst aber ein oder mehrere elektromagnetisch schaltbare Ventile, sowie vorzugsweise ein Relaisventil. Der Vorderachsmodulator erhält Vorderachsbremssignale SBVA vom Zentralmodul 100 und setzt diese in einen Vorderachsbremsdruck pBVA um, der über nicht weiter im Detail beschriebene ABS-Ventile an Vorderachsbremsaktuatoren 106a, 106b bereitgestellt wird, zum Bremsen der Vorderachse VA. Das Zentralmodul 100 ist ferner in dem in Fig. 1 gezeigten Ausführungsbeispiel gleichzeitig als kombiniertes Modul ausgebildet und übernimmt auch die Funktion eines Hinterachsmodulators, der hier nicht separat gezeigt ist. Das Zentralmodul 100 weist dazu ebenfalls ein oder mehrere elektronisch schaltbare Ventile und vorzugsweise ein Relaisventil auf und empfängt darüber hinaus den Vorratsdruck pV von dem ersten Druckluftvorrat 220. Das Zentralmodul 100 schaltet dann direkt die eigenen Ventile und steuert einen Hinterachsbremsdruck pBHA radgerecht an Hinterachsbremsaktuatoren 108a, 108b aus. Es soll aber verstanden werden, dass das elektronisch steuerbare pneumatische Bremssystem 206 gemäß der hierin beschriebenen Erfindung auch solche Bremssysteme umfassen kann, die einen separaten Hinterachsmodulator umfassen, der insbesondere von dem Zentralmodul getrennt angeordnet ist. In solchen Fällen wäre der Hinterachsmodulator wenigstens über elektrische Leitungen, vorzugsweise über eine Busleitung, mit dem Zentralmodul 100 verbunden.

Das elektronisch steuerbare pneumatische Bremssystem 206 lässt sich aber nicht nur über die Einheit für autonomes Fahren 102 steuern, sondern auch über einen Bremswertgeber 110. Der Bremswertgeber 110 ist über eine erste elektrische Bremswertgeberleitung 112 mit dem Zentralmodul 100 verbunden und stellt diesem ein Bremswertgebersignal SBST bereit. Über eine zweite elektrische Bremswertgeberleitung 114 ist der Bremswertgeber 110 mit einem elektropneumatischen Feststellbremsmodul 120 verbunden, welches noch genauer beschrieben werden wird. Auch an diesem stellt der Bremswertgeber 110 das Bremswertgebersignal SBST bereit. Ferner ist der Bremswertgeber 110 über eine pneumatische Bremswertgeberleitung 116 pneumatisch mit der Vorderachse VA verbunden. Über die pneumatische Bremswertgeberleitung 116 steuert der Bremswertgeber 110 einen pneumatischen Bremswertgeberdruck pBST an dem Vorderachsmodulator 104 aus, um diesen pneumatisch zu steuern und so zu veranlassen, dass der Vorderachsbremsdruck pBVA pneumatisch ausgesteuert wird.

Für den Fall, dass in dem Betriebsbremssystem 208, insbesondere dem Zentralmodul 100 oder einer diesem zugeordneten ersten Energieversorgung 122 ein Fehler auftritt, ist das Redundanzsystem 210 dazu ausgebildet, die Steuerung des elektronisch steuerbaren pneumatischen Bremssystems 206 zu übernehmen. Das Redundanzsystem 210 wird hier maßgeblich von dem elektropneumatischen Feststellbremsmodul 120 gesteuert. Das Feststellbremsmodul 120 wird von einer zweiten Energiequelle 124 versorgt, die unabhängig von der ersten Energiequelle 122 ist. Das Feststellbremsmodul 120 ist ferner über den Fahrzeugbus 212 auch mit der Einheit für autonomes Fahren 102 verbunden und empfängt ebenso das elektronische Bremsanforderungssignal XBR. Das Feststellbremsmodul 120 weist im Inneren eine elektronische Steuereinheit ECU sowie mehrere Ventile auf, die im weiteren Verlauf noch genauer beschrieben werden. Zum redundanten Bremsen des Fahrzeugs 200 steuert das Feststellbremsmodul 120 einerseits pneumatisch, über eine pneumatische Redundanzleitung 126, und einen Vorderachsredundanzdruck pRVA die Vorderachse VA an. Über ein Vorderachs-Wechselventil 128 wird der Vorderachsredundanzdruck pRVA dem Vorderachsmodulator 104 bereitgestellt, der diesen empfängt und in Antwort darauf den Vorderachsbremsdruck pBVA aussteuert. Die Hinterachse HA wird von dem Feststellbremsmodul 120 im Redundanzbetrieb, das heißt, wenn das Feststellbremsmodul 120 im Redundanzsystem 210 arbeitet, nicht über die Hinterachsbremsaktuatoren 108a, 108b gebremst, sondern über Federspeicherbremszylinder 8a, 8b. Das Feststellbremsmodul 120 ist nicht nur dazu ausgebildet, im Redundanzbetrieb das Fahrzeug 200 zu bremsen, sondern fungiert auch als Feststellbremsmodul 120 zum Parken des Fahrzeugs 200. Zu diesem Zweck ist das Feststellbremsmodul 120 mit dem dritten Druckluftvorrat 224 verbunden und empfängt Vorratsdruck pV von diesem. Im Normalbetrieb des Fahrzeugs 200 belüftet das Feststellbremsmodul 120 die Federspeicherbremszylinder 8a, 8b, sodass diese gelöst sind. Im Redundanzbetrieb hingegen werden die Federspeicherbremszylinder 8a, 8b jeweils teilweise oder vollständig entlüftet, um die Hinterachse HA zu bremsen.

Bei elektronisch steuerbaren pneumatischen Bremssystemen 206, die auf diese Weise arbeiten, das heißt, in denen ein einem Parkbremskreis 218 zugeordnetes Modul, wie das Feststellbremsmodul 120, im Redundanzbetrieb Federspeicherbremszylinder 8a, 8b ansteuert, um das Fahrzeug zu bremsen, besteht das Problem, dass für den Fall, dass dieses Modul ausfällt oder einen Fehler hat oder nicht oder nicht richtig funktioniert, die Federspeicherbremszylinder 8a, 8b entweder unmittelbar be- oder unmittelbar entlüftet werden, was in beiden Fällen zu schwerwiegenden Problemen führen kann.

Hier setzt die Erfindung an und schlägt zunächst eine elektropneumatische Feststellbremseinheit 1 vor, die als oder im Feststellbremsmodul 120 vorgesehen sein kann, um auf diese Weise das Redundanzsystem 210 zu steuern bzw. zu unterstützen.

Eine solche elektropneumatische Feststellbremseinheit 1 ist in einem ersten Ausführungsbeispiel in Fig. 2 gezeigt. Die Feststellbremseinheit 1 weist einen Vorratsanschluss 2 auf, an dem sie Vorratsdruck pV empfängt. In der in Fig. 1 gezeigten Einbausituation ist dieser Vorratsanschluss 2 mit dem dritten Druckluftvorrat 224 verbunden. Ferner weist die Feststellbremseinheit 1 einen Federspeicheranschluss 4 auf, der mit einem oder mehreren Federspeicherbremszylindern 8a, 8b verbunden sein kann, und an dem die Feststellbremseinheit 1 einen Federspeicherbremsdruck pF aussteuert. Im Inneren weist die Feststellbremseinheit 1 eine Vorsteuereinheit 10 auf, die über einen Vorsteuer-Belüftungspfad 12 mit dem Vorratsanschluss 2 verbunden ist, und über einen Vorsteuer-Entlüftungspfad 14 mit einer Entlüftung 3. Die Vorsteuereinheit 10 dient dazu, einen ersten Steuerdruck pS1 an einer Hauptventileinheit 16 bereitzustellen. Die Hauptventileinheit 16 ist ihrerseits mit dem Vorratsanschluss 2 verbunden und empfängt somit ebenfalls Vorratsdruck pV. Die Hauptventileinheit 16 ist dazu ausgebildet, in Abhängigkeit von dem empfangenen ersten Steuerdruck pS1 den Federspeicherbremsdruck pF an dem Federspeicheranschluss 4 auszusteuern. Das heißt, in einem Normalbetrieb des Fahrzeugs 200 sollte der Federspeicherbremsdruck pF ausgesteuert sein und im Wesentlichen dem Vorratsdruck pV entsprechen, um so die am Federspeicheranschluss 4 angeschlossenen Federspeicherbremszylinder 8a, 8b zu belüften und somit zu lösen. In einem Redundanzfall, wenn das Feststellbremsmodul 120, das die Feststellbremseinheit 1 umfassen kann oder als diese ausgebildet sein kann, die Steuerung des Fahrzeugs 200 übernimmt, muss der Federspeicherbremsdruck pF teilweise reduziert werden, um so die Federspeicherbremszylinder 8a, 8b selektiv zu entlüften, um das Fahrzeug 200 zu bremsen.

Wenn also die Vorsteuereinheit 10 den ersten Steuerdruck pS1 bereitstellt, und zwar in voller Höhe, wird auch der Federspeicheranschluss 4 in voller Höhe belüftet. Wird hingegen von der Vorsteuereinheit 10 kein erster Steuerdruck pS1 bereitgestellt, sondern die Vorsteuereinheit 10 vielmehr mit dem Vorsteuer-Entlüftungspfad 14 verbunden, und der erste Steuerdruck pS1 somit entlüftet, wird auch kein Federspeicherbremsdruck pF ausgesteuert. Der Federspeicheranschluss 4 hat dann in etwa den Druck der Umgebung.

Um nun für den Fall, dass ein zweiter Fehler F2 auftritt und die Vorsteuereinheit 10 nicht oder nicht richtig gesteuert werden kann, weist die Feststellbremseinheit 1 einen ungedrosselten Entlüftungspfad E1 und einen gedrosselten Entlüftungspfad E2 auf. Zum Umschalten zwischen dem ungedrosselten Entlüftungspfad E1 und dem gedrosselten Entlüftungspfad E2 ist eine Drosselanordnung 20 vorgesehen, die konkret in dem Ausführungsbeispiel gemäß Fig. 2 ein erstes monostabiles Drosselventil 22 aufweist, welches hier als 3/2-Wege-Drosselventil 23 ausgebildet ist, und welches weiter unten noch genauer beschrieben werden wird.

Zunächst wird die Vorsteuereinheit 10 im Detail beschrieben. Die Vorsteuereinheit 10 weist ein Einlass-Auslass-Ventil 17 auf, welches hier als Einlass-Auslass-3/2-Wege-Ventil 18 ausgebildet ist, und konkret in dem in Fig. 2 gezeigten Ausführungsbeispiel als Bistabilventil 19. Das Bistabilventil 19 weist einen ersten Bistabilventilanschluss 19.1 auf, der mit dem Vorratsanschluss 2 verbunden ist und Vorratsdruck pV empfängt. Ein zweiter Bistabilventilanschluss 19.2 ist mit einem Halteventil 32 der Vorsteuereinheit 10 verbunden, und ein dritter Bistabilventilanschluss 19.3 ist mit dem Vorsteuer-Entlüftungspfad 14 verbunden. Das Bistabilventil 19 ist in beiden Schaltstellungen stabil und lässt sich aufgrund eines ersten Schaltsignals S1 steuern, welches von einer elektronischen Steuereinheit ECU der Feststellbremsventileinheit 1 bereitgestellt wird. Dazu kann die elektronische Steuereinheit ECU, wie in Fig. 1 gezeigt, mit dem Zentralmodul 100, dem Fahrzeugbus 212 und/oder der Einheit für autonomes Fahren 102 verbunden sein. Das Bistabilventil 19 hat eine erste in Fig. 2 gezeigte Schaltstellung, in der der dritte Bistabilventilanschluss 19.3 mit dem zweiten Bistabilventilanschluss 19.2 verbunden ist, sodass der zweite Bistabilventilanschluss 19.2 mit dem Vorsteuer-Entlüftungspfad 14 verbunden ist und folglich entlüftet wird. In der zweiten in Fig. 2 nicht gezeigten Schaltstellung verbindet das Bistabilventil 19 den ersten Bistabilventilanschluss 19.1 mit dem zweiten Bistabilventilanschluss 19.2, sodass an dem zweiten Bistabilventilanschluss 19.2 der Vorratsdruck pV ausgesteuert wird. Der zweite Bistabilventilanschluss 19.2 ist also mit dem Vorsteuer-Belüftungspfad 12 verbunden.

Das Halteventil 32 ist als monostabiles 2/2-Wege-Ventil ausgebildet und weist einen ersten Halteventilanschluss 32.1 auf, der mit dem zweiten Bistabilventilanschluss 19.2 verbunden ist, sowie einen zweiten Halteventilanschluss 32.2, der mit der Hauptventileinheit 16 verbunden ist. Das monostabile Halteventil 32 ist stabil in einer ersten in Fig. 2 gezeigten Schaltstellung, in der der erste und zweite Halteventilanschluss 32.1, 32.2 miteinander verbunden sind. In einer zweiten in Fig. 2 nicht gezeigten bestromten Schaltstellung ist das Halteventil 32 geschlossen und kann so den ausgesteuerten Druck einsperren. Das Halteventil 32 lässt sich durch ein zweites Schaltsignal S2 schalten, welches ebenfalls von der elektronischen Steuereinheit ECU der elektropneumatischen Feststellbremsventileinheit 1 bereitgestellt wird.

Wenn das Bistabilventil 19 und das Halteventil 32 so gesteuert sind, dass ein Druck ausgesteuert wird, wird dieser Druck als erster Steuerdruck pS1 an der Hauptventileinheit 16 bereitgestellt. Konkret wird der erste Steuerdruck pS1 in dem in Fig. 2 gezeigten Ausführungsbeispiel zunächst an einem ersten Wechselventil 40 bereitgestellt, welches einen ersten Wechselventilanschluss 40.1 aufweist, der mit dem zweiten Halteventilanschluss 32.2 verbunden ist, einen zweiten Wechselventilanschluss 40.2, der mit einem später noch im Detail beschriebenen Löseanschluss 30 verbunden ist, sowie einen dritten Wechselventilanschluss 40.3, an den der jeweils höhere des an dem ersten und zweiten Wechselventilanschluss 40.1, 40.2 anliegenden Druck ausgesteuert wird. Das erste Wechselventil 40 ist also vorzugsweise als sogenanntes Select-High-Ventil ausgebildet.

Die Hauptventileinheit 16 umfasst in dem in Fig. 2 gezeigten konkreten Ausführungsbeispiel ein Relaisventil 34. Das Relaisventil 34 weist einen Relaisventil-Vorratsanschluss 34.1 auf, der mit dem Vorratsanschluss 2 verbunden ist und Vorratsdruck pV empfängt. Ferner weist es einen Relaisventil-Arbeitsanschluss 34.2 auf, der mit dem Federspeicheranschluss 4 verbunden ist und an diesem den Federspeicherbremsdruck pF aussteuert. Das Relaisventil 34 weist ferner einen Relaisventil-Entlüftungsanschluss 34.3 auf, der mit der Entlüftung 3 verbunden ist sowie einen Relaisventil-Steueranschluss 34.4, der mit der Vorsteuereinheit 10 verbunden ist und den ersten Steuerdruck pF1 empfängt, also in dem konkreten Ausführungsbeispiel gemäß Fig. 2 mit dem ersten Wechselventil 40 verbunden ist, genauer gesagt mit dem dritten Wechselventilanschluss 40.3. Es soll verstanden werden, dass das erste Wechselventil 40 hier nur optional ist und es andere Möglichkeiten gibt, eine ähnliche Schaltung zu realisieren. Insbesondere ist es auch denkbar und bevorzugt, dass der Relaisventil-Steueranschluss 34.4 direkt mit dem zweiten Halteventilanschluss 32.2 oder sogar direkt mit dem zweiten Bistabilventilanschluss 19.2 verbunden ist. Insofern ist auch das Halteventil 32 nur optional.

Bei herkömmlichen Feststellbremsventileinheiten, die keine monostabile Drosselanordnung 20 aufweisen, ist der dritte Bistabilventilanschluss 19.3 direkt mit der Entlüftung 3 verbunden. Dies hat zur Folge, dass, wenn ein Doppelfehler auftritt und auch die elektronische Steuereinheit ECU der Feststellbremsventileinheit 1 nicht oder nicht richtig funktioniert und das erste und zweite Schaltsignal S1, S2 nicht oder nicht richtig bereitgestellt werden, das Halteventil 32 in die in Fig. 2 gezeigte stabile Schaltstellung zurückfällt, und das Bistabilventil 19 in der Schaltstellung verharrt, in der es zum Zeitpunkt des zweiten Fehlers F2 ist. Ist das Bistabilventil 19 dann in der in Fig. 2 nicht gezeigten zweiten Schaltstellung, bleibt der Federspeicherbremsdruck pF an dem Federspeicheranschluss 4 ausgesteuert und die Federspeicherbremszylinder 8a, 8b entsprechend belüftet und gelöst. Es gibt alternative Schaltvorgänge, bei denen bei Start des Fahrzeugs 200 zunächst das Bistabilventil 19 in die in Fig. 2 nicht gezeigte zweite Schaltstellung verbracht wird, um so den Federspeicheranschluss 4 zu belüften. Ist dies erfolgt, wird das Halteventil 32 in die zweite in Fig. 2 nicht gezeigte Schaltstellung geschaltet, sodass der erste und zweite Halteventilanschluss 32.1. 32.2 getrennt werden, und in der Folge der erste Steuerdruck pS1 eingesperrt wird. Das Bistabilventil 19 kann dann in die erste in Fig. 2 gezeigte Schaltstellung zurückgeschaltet werden, also in die Entlüftungsstellung. Wenn nun die elektronische Steuereinheit ECU ausfällt, wird auch das Halteventil 32 stromlos geschaltet und fällt in die erste stabile Schaltposition zurück, sodass in der Folge die Hauptventileinheit 16 mit dem Vorsteuerentlüftungspfad 14 verbunden ist und entlüftet wird. In der Folge fallen die Federspeicherbremszylinder 8a, 8b ein. Dies kann mitunter ein sehr abruptes Bremsen des Fahrzeugs 200 zur Folge haben, was mit einem Blockieren von einem oder mehreren Rändern des Fahrzeugs 200 einhergehen kann, was in der Folge wiederum zu Fahrinstabilitäten führen kann.

Um dies zu vermeiden, ist gemäß der hierin beschriebenen Erfindung die monostabile Drosselanordnung 20 vorgesehen, vorzugsweise in dem Vorsteuerentlüftungspfad 14. Mit Bezug auf Fig. 2 umfasst die monostabile Drosselanordnung 20, wie oben bereits erwähnt, ein erstes monostabiles Drosselventil 22, das als 3/2-Wege-Drosselventil 23 ausgebildet ist. Das erste monostabile Drosselventil 22 weist einen ersten Drosselventilanschluss 22.1 auf, der mit dem dritten Bistabilventilanschluss 19.3 verbunden ist, also mit dem Anschluss des Bistabilventils 19, der mit dem Vorsteuer-Entlüftungspfad 14 verbunden ist. Ferner weist das erste monostabile Drosselventil 22 einen zweiten Drosselventilanschluss 22.2 und einen dritten Drosselventilanschluss 22.3 auf. Der zweite Drosselventilanschluss 22.2 verbindet den ersten Drosselventilanschluss 22.1 mit dem ungedrosselten Entlüftungspfad E1 und der dritte Drosselventilanschluss 22.3 verbindet den ersten Drosselventilanschluss 22.1 mit dem gedrosselten Entlüftungspfad E2. In einer ersten, stabilen Schaltstellung des ersten monostabilen Drosselventils 22 ist der erste Drosselventilanschluss 22.1 mit dem dritten Drosselventilanschluss 22.3 verbunden, sodass in der stabilen Schaltstellung des ersten Drosselventils 22 der dritte Bistabilventilanschluss 19.3 mit dem gedrosselten Entlüftungspfad E2 verbunden ist. In einer zweiten in Fig. 2 nicht gezeigten Schaltstellung des ersten Drosselventils 22 ist der erste Drosselventilanschluss 22.1 mit dem zweiten Drosselventilanschluss 22.2 verbunden, sodass der dritte Bistabilventilanschluss 19.3 mit dem ungedrosselten Entlüftungspfad E1 verbunden ist. Das erste monostabile Drosselventil 22 kann basierend auf einem dritten Schaltsignal S3, welches von der elektronischen Steuereinheit ECU bereitgestellt wird, von der ersten in Fig. 2 gezeigten Schaltstellung in die zweite in Fig. 2 nicht gezeigte Schaltstellung geschaltet werden. Im normalen Fahrbetrieb wird das dritte Schaltsignal S3 vorzugsweise permanent bereitgestellt, sodass das erste monostabile Drosselventil 22 stets in der zweiten in Fig. 2 nicht gezeigten Schaltstellung ist, in der das Bistabilventil 19 mit dem ungedrosselten Entlüftungspfad E1 verbunden ist. Erst wenn aufgrund eines zweiten Fehlers F2 die elektronische Steuereinheit ECU nicht oder nicht richtig funktioniert, wird das dritte Schaltsignal S3 nicht mehr bereitgestellt, sodass das erste monostabile Drosselventil 22 in die erste in Fig. 2 gezeigte stabile Schaltstellung zurückfällt, in der das Bistabilventil 19 mit dem gedrosselten Entlüftungspfad E2 verbunden ist.

Dies hat zur Folge, dass in einem Fehlerfall, in dem die elektronische Steuereinheit ECU der Feststellbremsventileinheit 1 nicht oder nicht richtig funktioniert, sei es aufgrund eines Fehlers in der elektronischen Steuereinheit ECU selbst oder aufgrund eines Fehlers in der Energieversorgung, der Federspeicheranschluss 4 gedrosselt entlüftet wird, wenn das Bistabilventil 19 in die entsprechende erste in Fig. 1 gezeigte Schaltstellung geschaltet ist. Das gedrosselte Entlüften des Federspeicheranschlusses 4 erlaubt ein gedrosseltes Einlegen der Federspeicherbremszylinder 8a, 8b, sodass das Fahrzeug 200 kontrolliert gestoppt werden kann.

Der gedrosselte Entlüftungspfad E2 hat vorzugsweise gegenüber dem ungedrosselten Entlüftungspfad E1 einen verringerten Querschnitt, beispielsweise um den Faktor 100 bis 10,000. Bevorzugt beträgt die Nennweite des ungedrosselten Entlüftungspfad E1 etwa die 10 bis 100-fache Nennweite des gedrosselten Entlüftungspfads E2.

In dem in Fig. 2 gezeigten Ausführungsbeispiel ist hierzu innerhalb des ersten monostabilen Drosselventils 22 eine erste Drossel 21 ausgebildet, sodass das erste monostabile Drosselventil 22 in sich die erste Drossel 21 aufweist.

Wie ferner aus Fig. 2 ersichtlich, umfasst die Feststellbremsventileinheit 1 auch einen Löseanschluss 30, der oben bereits kurz erwähnt wurde. Der Löseanschluss 30 ist hier direkt mit dem zweiten Wechselventilanschluss 40.2 verbunden. An den Löseanschluss 30 kann ein Lösedruck pL ausgesteuert werden. Ist der Lösedruck pL höher als der erste Steuerdruck pS1, wird der Lösedruck pL von dem ersten Wechselventil 40 an dem Relaisventil-Steueranschluss 34.4 bereitgestellt, sodass in der Folge wiederum der Federspeicherbremsdruck pF ausgesteuert werden kann. Der Löseanschluss 30 ist für den Fall vorgesehen, dass die elektronische Steuereinheit ECU der Feststellbremsventileinheit 1 nicht oder nicht richtig funktioniert, aber dennoch die Federspeicherbremszylinder 8a, 8b belüftet werden sollen. Dies kann beispielsweise dann der Fall sein, wenn der zweite Fehler F2, der das Redundanzsystem 210 betrifft, vor dem ersten Fehler F1 auftritt. Der Lösedruck pL kann also vorzugsweise von dem Betriebsbremssystem 208 bereitgestellt werden, um zu verhindern, dass für den Fall, dass ein isolierter zweiter Fehler F2 in der elektronischen Steuereinheit ECU der Feststellbremsventileinheit 1 auftritt, die Federspeicherbremszylinder 8a, 8b gedrosselt entlüftet werden.

Die Ausgestaltung des ersten monostabilen Drosselventils 23 als 3/2-WegeVentil bedingt, dass in dem Vorsteuer-Entlüftungspfad 14 eine Y- bzw. T-Gabelung vorgesehen ist. Der zweite Drosselventilanschluss 22.2 ist so mit einem ersten Leitungsstück 36.1 verbunden und der dritte Drosselventilanschluss 22.3 mit einem zweiten Leitungsstück 36.2. Das erste Leitungsstück 36.1 ist dem ungedrosselten Entlüftungspfad E1 zugeordnet, während das zweite Leitungsstück 36.2 dem gedrosselten Entlüftungspfad E2 zugeordnet ist. Die beiden Leitungsstücke 36.1 und 36.2 sind dann an einer Verbindungsstelle 36.3 miteinander verbunden und münden letztlich in denselben Entlüftungsanschluss 3.

Darüber hinaus zeigt Fig. 2 einen Drucksensor 38, der ein Federspeicherdrucksignal SPF an der elektronischen Steuereinheit ECU bereitstellt. Zu diesem Zweck ist der Drucksensor 38 über eine Druckmessleitung 39 mit dem Federspeicheranschluss 4 bzw. dem Relaisventil-Arbeitsanschluss 34.2 verbunden, um so den Federspeicherbremsdruck pF zu erfassen.

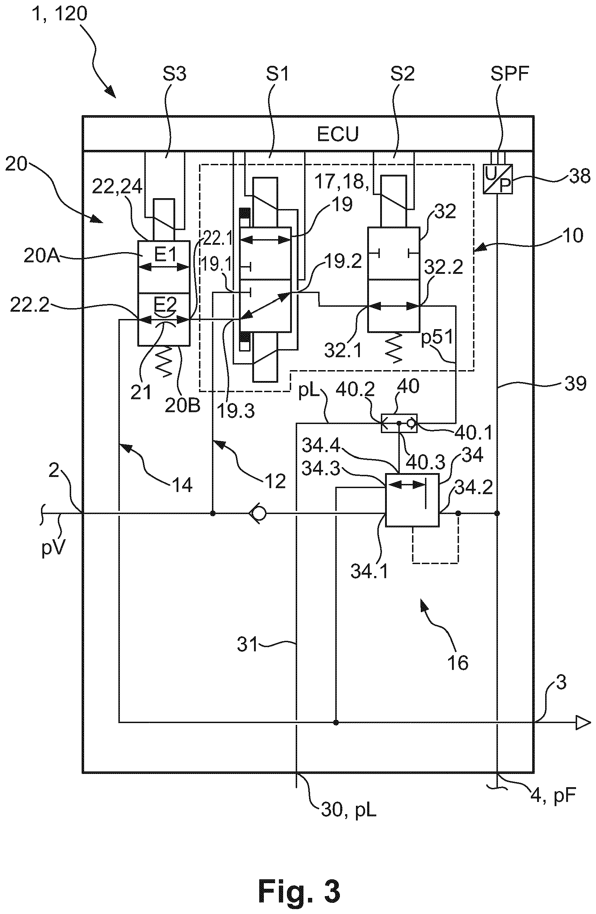

Fig. 3 zeigt nun ein zweites Ausführungsbeispiel der elektropneumatischen Feststellbremseinheit 1. Gleiche und ähnliche Elemente sind mit gleichen Bezugszeichen versehen und insofern wird vollumfänglich auf die obige Beschreibung Bezug genommen. Im Folgenden werden insbesondere die Unterschiede zum ersten Ausführungsbeispiel (Fig. 2) hervorgehoben.

Der wesentliche Unterschied zwischen dem ersten Ausführungsbeispiel (Fig. 2) und dem zweiten Ausführungsbeispiel (Fig. 3) liegt darin, dass das erste monostabile Drosselventil 22 nicht als 3/2-Wege-Drosselventil 23 ausgebildet ist, sondern als 2/2-Wege-Drosselventil 24. Es hat demnach nur einen ersten Drosselventilanschluss 22.1 und einen zweiten Drosselventilanschluss 22.2. Der erste Drosselventilanschluss 22.1 ist, wie dies auch im ersten Ausführungsbeispiel (Fig. 2) der Fall war, mit dem dritten Bistabilventilanschluss 19.3 verbunden. Der zweite Drosselventilanschluss 22.2 ist hier wiederum mit der Entlüftung 3 verbunden. Da das erste monostabile Drosselventil 22 als 2/2-Wege-Drosselventil 24 ausgebildet ist, können auch die ersten und zweiten Leitungsabschnitte 36.1, 36.2 entfallen. Vielmehr ist die pneumatische Leitung des Vorsteuer-Entlüftungspfads 14 direkt an den zweiten Drosselventilanschluss 22.2 angeschlossen, die dann zum Entlüftungsanschluss 3 verläuft. Wiederum ist innerhalb des ersten monostabilen Drosselventils 22 die Drossel 21 untergebracht, und zwar so, dass der erste und zweite Drosselventilanschluss 22.1, 22.2 in der ersten monostabilen Schaltstellung 20b über die Drossel 21 verbunden sind und in der zweiten nicht stabilen Schaltstellung 20a nicht über eine Drossel, sondern über einen normalen Querschnitt verbunden sind. Wiederum lässt sich das 2/2-Wege-Drosselventil 24 durch das dritte Schaltsignal S3 von der ersten in Fig. 3 gezeigten in die zweite in Fig. 3 nicht gezeigte Schaltstellung 20A verbringen, wobei es stromlos in die erste in Fig. 3 gezeigte Schaltstellung 20B zurückfällt, um so eine gedrosselte Entlüftung zu bewirken.

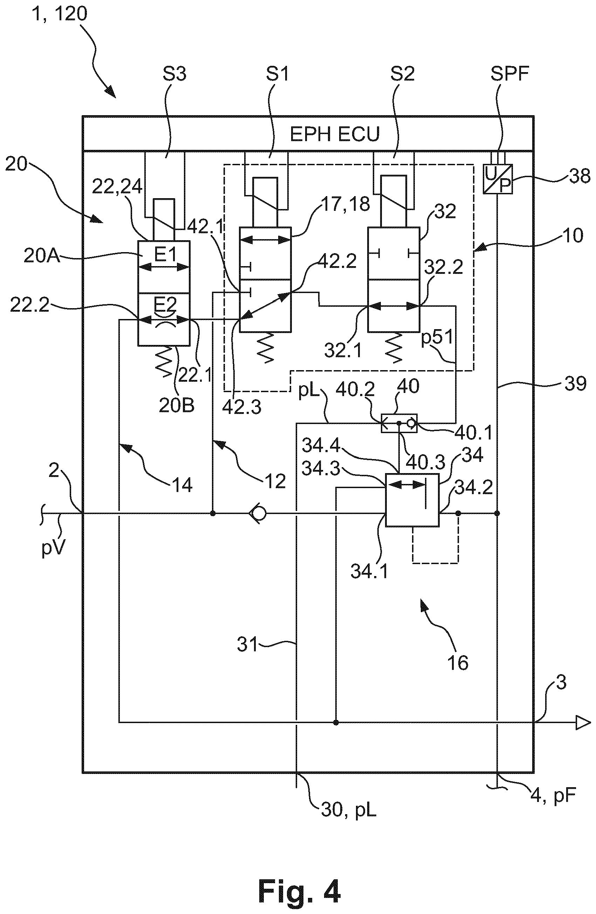

Fig. 4 zeigt ein drittes Ausführungsbeispiel des elektropneumatischen Feststellbremsmoduls 1. Wiederum sind gleiche und ähnliche Elemente mit gleichen Bezugszeichen versehen, sodass vollumfänglich auf die obige Beschreibung Bezug genommen wird. Das dritte Ausführungsbeispiel (Fig. 4) basiert im Wesentlichen auf dem zweiten Ausführungsbeispiel (Fig. 3). Im Folgenden sind insbesondere die Unterschiede hervorgehoben.

Der wesentliche Unterschied im dritten Ausführungsbeispiel (Fig. 4) zum zweiten Ausführungsbeispiel (Fig. 3) liegt darin, dass das Einlass-Auslass-Ventil 17 zwar wiederum als 3/2-Wege-Einlass-Auslass-Ventil 18 ausgebildet ist, aber hier als monostabiles 3/2-Wege-Einlass-Auslass-Ventil 42. Es weist einen ersten 3/2-Wegeventil-Anschluss 42.1 auf, der mit dem Vorratsanschluss 2 verbunden ist und Vorratsdruck pV empfängt. Ein zweiter 3/2-Wegeventil-Anschluss 42.2 ist analog zum zweiten Bistabilventilanschluss 19.2 mit dem Halteventil 32 verbunden, genauer gesagt mit dem ersten Halteventilanschluss 32.1. Ein dritter 3/2-Wegeventil-Anschluss 42.3 ist analog zum dritten Bistabilventilanschluss 19.3 mit dem Vorsteuer-Entlüftungspfad 14 verbunden, genauer gesagt, mit der monostabilen Drosselventileinheit 20 und in dem konkreten Ausführungsbeispiel gemäß Fig. 4 mit dem ersten Drosselventilanschluss 22.1. Ein monostabiles 3/2-Wege-Einlass-Auslass-Ventil 42 hat den Vorteil, dass es kleinbauender und zudem kostengünstiger sein kann als ein Bistabilventil.

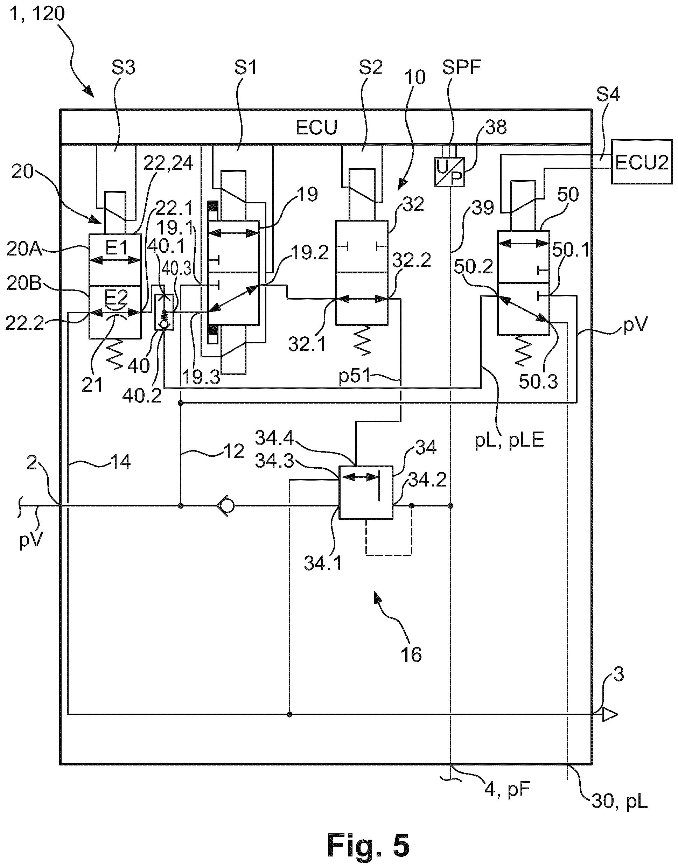

Ein viertes Ausführungsbeispiel (Fig. 5) basiert im Wesentlichen auf dem zweiten Ausführungsbeispiel (Fig. 3), sodass wiederum gleiche und ähnliche Elemente mit gleichen Bezugszeichen versehen sind. Wiederum wird vollumfänglich auf die obige Beschreibung Bezug genommen und im Nachfolgenden die Unterschiede hervorgehoben.

Der wesentliche Unterschied im vierten Ausführungsbeispiel (Fig. 5) besteht darin, dass ein Löseventil 50 vorgesehen ist, welches pneumatisch zwischen den Löseanschluss 30 und die Hauptventileinheit 16 geschaltet ist. Genauer gesagt ist das Löseventil 50 sogar zwischen den Löseanschluss und die Vorsteuereinheit 10 geschaltet, um auf diese Weise den Lösedruck pL über die Vorsteuereinheit 10 an der Hauptventileinheit 16 auszusteuern, um so die Aussteuerung eines Federspeicherbremsdrucks pF in Abhängigkeit von einer Schaltstellung des Löseventils 16 zu bewirken.

In dem in Fig. 5 gezeigten konkreten Ausführungsbeispiel ist das Löseventil 50 als monostabiles 3/2-Wege-Ventil ausgebildet und weist einen ersten Löseventilanschluss 50.1 auf, der mit dem Vorratsanschluss 2 verbunden ist und Vorratsdruck pV empfängt, einen zweiten Löseventilanschluss 50.2, der mit der Vorsteuereinheit 10 verbunden ist, sowie einen dritten Löseventilanschluss 50.3, der mit dem Löseanschluss 30 verbunden ist. In der ersten in Fig. 5 gezeigten stabilen Schaltstellung ist der zweite Löseventilanschluss 50.2 mit dem dritten Löseventilanschluss 50.3 verbunden, sodass der am Löseanschluss 30 ausgesteuerte Lösedruck pL von dem dritten Löseventilanschluss zum zweiten Löseventilanschluss 50.2 weitergeleitet und auf diese Weise an der Vorsteuereinheit 10 bereitgestellt werden kann. Das Löseventil 50 kann aber auch basierend auf einem vierten Schaltsignal S4 geschaltet werden, um den ersten Löseventilanschluss 50.1 mit dem zweiten Löseventilanschluss 50.2 zu verbinden, um so den Vorratsdruck pV an der Vorsteuereinheit 10 auszusteuern. Das vierte Schaltsignal S4 wird vorzugsweise von einer zweiten elektronischen Steuereinheit ECU2 bereitgestellt, die eine externe elektronische Steuereinheit ist, das heißt, nicht in die elektropneumatische Feststellbremsventileinheit 1 integriert, und auch unabhängig von der elektronischen Steuereinheit ECU ist. Die externe elektronische Steuereinheit ECU2 kann beispielsweise die Steuereinheit eines Zentralmoduls, eines übergeordneten Moduls, eines weiteren Achsmodulators, eines Anhängerventils oder dergleichen sein.

Die Einsteuerung des Lösedrucks pL, der über das Löseventil 50 an der Vorsteuereinheit 10 bereitgestellt wird, erfolgt in dem in Fig. 5 gezeigten vierten Ausführungsbeispiel dann über das erste Wechselventil 40. Um dies zu erreichen, ist der erste Wechselventilanschluss 40.1 in dem in Fig. 5 gezeigten Ausführungsbeispiel mit der monostabilen Drosselanordnung verbunden, genauer gesagt mit dem ersten Drosselventilanschluss 22.1 Der zweite Wechselventilanschluss 40.2 ist hingegen mit dem Löseventil 50 verbunden, genauer gesagt mit dem zweiten Löseventilanschluss 50.2, um von diesem den Lösedruck pL zu empfangen. Der dritte Wechselventilanschluss 40.3 ist dann mit der Vorsteuereinheit 10 verbunden, in dem in Fig. 5 gezeigten Ausführungsbeispiel konkret mit dem dritten Bistabilventilanschluss 19.3, der in dem in Fig. 3 gezeigten zweiten Ausführungsbeispiel noch unmittelbar mit der Drosselanordnung 20 verbunden war. Das erste Wechselventil 40 ist so ausgelegt, dass ein Entlüften des dritten Bistabilventilanschlusses 19.3 nach wie vor über die Drosselanordnung 20 erfolgt, aber ein Lösedruck pL über den zweiten Wechselventilanschluss 40.2 an dem dritten Wechselventilanschluss 40.3 ausgesteuert werden kann, wenn dieser höher ist als der am ersten Wechselventilanschluss 40.1 anliegende Druck, was regelmäßig der Fall ist, da an diesem im Allgemeinen der Umgebungsdruck der Entlüftung 3 anliegt. Dies wird vorzugsweise dadurch realisiert, dass das erste Wechselventile 40 eine Vorzugsstellung aufweist, wie in Fig. 5 gezeigt. Hierzu ist eine Feder vorgesehen, die das erste Wechselventil 40 so belastet, dass in einem drucklosen Zustand, der erste und dritte Wechselventilanschluss 40.1, 40.3 verbunden sind. Hierdurch wird bei einem drucklosen zweiten Wechselventilanschluss 40.2 sichergestellt, dass die Vorsteuereinheit 10, umfassend das Bistabilventil 19 und die Halteventil 32, über die Drosselanordnung 20, also den ersten Wechselventilanschluss 40.1 und nicht den zweiten Wechselventilanschluss 40.2 entlüftet wird.

Das Vorsehen des Löseventils 50 hat den weiteren Effekt, dass durch Schalten des Löseventils 50 in die zweite in Fig. 5 nicht gezeigte Schaltstellung der Lösedruck pL elektronisch ausgesteuert werden kann als elektronisch ausgesteuerter Lösedruck pLE. Das heißt, zum Aussteuern des Lösedrucks pL an der Vorsteuereinheit 10 ist es nach dieser Ausführungsform nicht zwingend erforderlich, dass ein Lösedruck pL an dem Löseanschluss 30 bereitgestellt wird; vielmehr kann auch das Löseventil 50 geschaltet werden, um so den Vorratsdruck pV durchzusteuern und als elektronisch ausgesteuerten Lösedruck pLE an der Vorsteuereinheit 10 bereitzustellen. Hierdurch können pneumatische Verschlauchungen reduziert und das Einsatzspektrum vergrößert werden. Ferner ist es möglich, die Sicherheit zu verbessern, für den Fall, dass einerseits kein Lösedruck pL bereitgestellt wird, andererseits aber die elektronische Steuereinheit ECU ausgefallen ist und der Federspeicherbremsdruck pF nicht mehr elektronisch über die Vorsteuereinheit 10 ausgesteuert werden kann. Für diesen Fall, und wenn das Bistabilventil 19 in der ersten in Fig. 5 gezeigten Schaltstellung ist, kann über das Löseventil 50 der elektronisch ausgesteuerte Lösedruck pLE bereitgestellt werden, um auf diese Weise den Federspeicheranschluss 4 zu belüften.

Die Verschaltung des Löseventils 50, wie in dem vierten Ausführungsbeispiel gezeigt, ist allerdings nicht die einzige Möglichkeit. Es soll verstanden werden, dass das Löseventil 50 auch bei einer Grundkonfiguration, wie beispielsweise im zweiten Ausführungsbeispiel (Fig. 3) gezeigt, auch direkt in die Leitung, die vom Löseanschluss 30 bis zum zweiten Wechselventilanschluss 40.2 verläuft, eingesetzt werden kann.

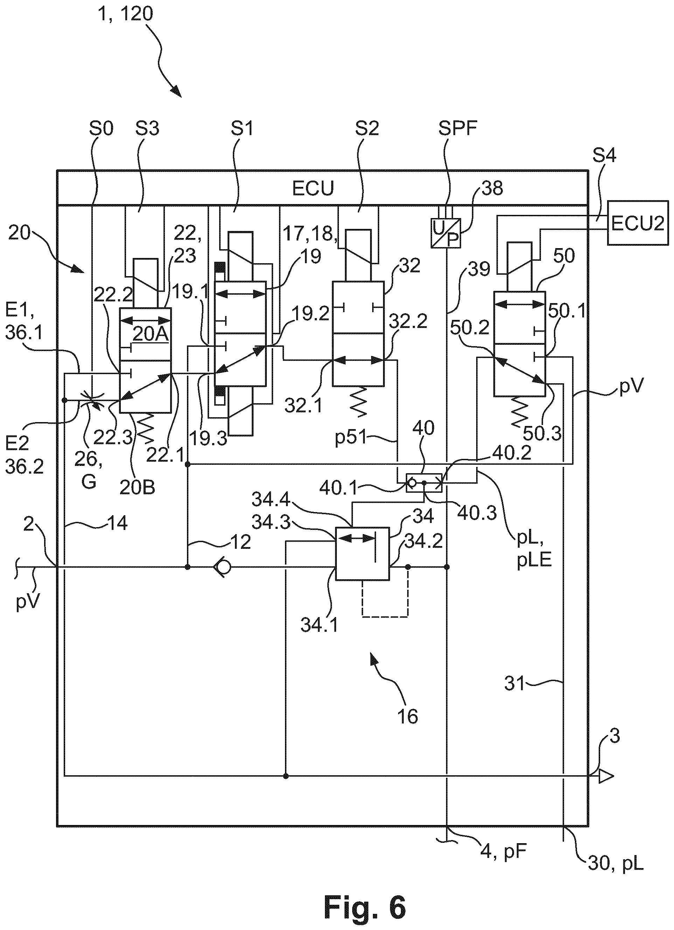

Eine solche Konfiguration ist beispielsweise im fünften Ausführungsbeispiel (Fig. 6) gezeigt. Im fünften Ausführungsbeispiel (Fig. 6) sind wiederum gleiche und ähnliche Elemente mit gleichen Bezugszeichen wie in den vorherigen Ausführungsbeispielen versehen, sodass wiederum vollumfänglich auf die obige Beschreibung Bezug genommen wird. Im Folgenden werden wiederum insbesondere die Unterschiede zu den vorherigen Ausführungsbeispielen beschrieben, wobei hierzu maßgeblich auf das erste Ausführungsbeispiel (Fig. 2) und das vierte Ausführungsbeispiel (Fig. 5) Bezug genommen wird.

In der Grundkonfiguration entspricht das Layout gemäß dem fünften Ausführungsbeispiel (Fig. 6) dem aus dem ersten Ausführungsbeispiel (Fig. 2).

Zunächst ist das Löseventil 50, wie zuvor erwähnt, unmittelbar in die Lösedruckleitung 31 (vgl. Fig. 2) eingesetzt, die den Löseanschluss 30 mit der Hauptventileinheit 16, in dem gezeigten Ausführungsbeispiel genauer gesagt mit dem ersten Wechselventil 40 verbindet. Zu diesem Zweck ist das Löseventil 50 wiederum zwischen den Löseanschluss 30 und die Hauptventileinheit 16 geschaltet, aber nicht zwischen den Löseanschluss 30 und die Vorsteuereinheit 10. Vielmehr ist das Löseventil 50 so verschaltet, dass es zwischen der Vorsteuereinheit 10 und der Hauptventileinheit 16 in diese mündet. Zu diesem Zweck ist wiederum der erste Löseventilanschluss 50.1 mit dem Vorratsanschluss 2 verbunden, um Vorratsdruck pV zu empfangen. Der dritte Löseventilanschluss 50.3 ist wiederum, wie dies auch mit Bezug auf Fig. 5 beschrieben wurde, mit dem Löseanschluss 30 verbunden und empfängt den Lösedruck pL. Der zweite Löseventilanschluss 50.2 ist allerdings nicht, wie in Fig. 5 gezeigt, stromaufwärts des Bistabilventils 19.1 mit dem Vorsteuerentlüftungspfad 14 verbunden, sondern mündet direkt in den zweiten Wechselventilanschluss 40.2, wie dies auch mit Bezug auf die Lösedruckleitung 31 in Fig. 2 beschrieben wurde. Das Löseventil 50 ist also tatsächlich in die Lösedruckleitung 31 eingesetzt. Eine Änderung in der Verschaltung der Vorsteuereinheit 10 und/oder der Hauptventileinheit 16 ergibt sich hierdurch nicht. Wiederum lässt sich das Löseventil 50, wie dies grundsätzlich schon mit Bezug auf Fig. 5 beschrieben wurde, durch ein viertes Schaltsignal S4 schalten, um so den elektronisch ausgesteuerten Lösedruck pLE an der Hauptventileinheit 16 bereitzustellen, um für den Fall, dass kein Lösedruck pL an dem Löseanschluss 30 ausgesteuert wird, dennoch auf diese Weise den Federspeicherbremsdruck pF aussteuern zu können.

Ein weiterer Unterschied im fünften Ausführungsbeispiel (Fig. 6), der allerdings unabhängig von dem gerade beschriebenen Unterschied in der Verschaltung des Löseventils 50 ist, sodass die beiden Unterschiede auch separat voneinander mit einem oder mehreren der weiteren hierin beschriebenen Ausführungsbeispielen kombiniert werden können, liegt in der Ausgestaltung der Drosselanordnung 20.

Im Grunde ist die Drosselanordnung 20 analog zu dem ersten Ausführungsbeispiel (Fig. 2) ausgebildet und umfasst wiederum das 3/2-Wege-Drosselventil 23. Auch die ersten, zweiten und dritten Drosselventilanschlüsse 22.1, 22.2, 22.3 sind ebenso verschaltet, wie dies bereits mit Bezug auf Fig. 2 beschrieben wurde. Ein Unterschied liegt allerdings darin, dass keine Drossel 21 innerhalb des Ventils 22 selbst angeordnet ist, sondern in dem in Fig. 6 gezeigten fünften Ausführungsbeispiel ist eine einstellbare Drossel 26 stromabwärts des dritten Drosselventilanschlusses 22.3 in dem gedrosselten Entlüftungspfad E2 angeordnet, in dem gezeigten Ausführungsbeispiel genauer gesagt, in dem zweiten Leitungsstück 36.2. Die Funktionsweise des ersten monostabilen Drosselventils 22 ist identisch zu der Funktionsweise des ersten monostabilen Drosselventils 22, welches mit Bezug auf Fig. 2 beschrieben wurde. Die einstellbare Drossel 26 ist allerdings einstellbar, während die Drossel 21 nicht einstellbar ist. Einstellbar bedeutet hier, dass ein Drosselungsgrad G verändert werden kann, und zwar durch Bereitstellen eines elektronischen Drosselsignals SD, das hier auch von der elektronischen Steuereinheit ECU bereitgestellt wird. Es soll verstanden werden, dass das Drosselsignal SD aber auch von anderen elektronischen Steuereinheiten, wie insbesondere der externen elektronischen Steuereinheit ECU2, einem Zentralmodul, einer übergeordneten Einheit, einem weiteren Achsmodulator, oder einer Einheit für autonomes Fahren 102, wie sie mit Bezug auf Fig. 1 beschrieben wurde, bereitgestellt werden kann. Ein Drosselungsgrad G bezeichnet ein Verhältnis zwischen einem Maximalquerschnitt und einem aktuell eingestellten verringerten Querschnitt. Der Drosselungsgrad G kann vorzugsweise in Abhängigkeit von bestimmten Informationen über das Fahrzeug 200 eingestellt werden, wie insbesondere von dem elektronisch steuerbaren pneumatischen Bremssystem 206 bereitgestellten Daten ST, in Abhängigkeit von einem Fahrzeugtyp SF, einem Beladungszustand SZ, einer Achslachs SA, einer Fahrzeugmasse SM oder einer Bremsverteilung SBV. Die entsprechenden Signale werden in dem hier gezeigten Ausführungsbeispiel insbesondere über den Fahrzeugbus 212 (vgl. Fig. 1) von der Einheit für autonomes Fahren bereitgestellt.

Während die Ausführungsbeispiele 1 bis 5 (vgl. Fig. 2 bis 6) jeweils eine elektropneumatische Feststellbremseinheit 1 zeigen, die als elektropneumatisches Feststellbremsmodul 120 integriert ausgebildet ist, zeigen die Ausführungsbeispiele 6 bis 9 jeweils elektropneumatische Feststellbremseinheiten 1, die ein elektropneumatisches Feststellbremsmodul 120 umfassen, wobei aber die Drosselanordnung 20 nicht in das elektropneumatische Feststellbremsmodul 120 integriert ist, sondern extern zu diesem angeordnet ist. Die Ausführungsbeispiele 6 bis 9 eignen sich daher besonders gut auch, um bestehende Feststellbremsmodule, wie sie bereits im Markt bekannt und verbaut sind, mit weiteren Elementen, nämlich insbesondere der Drosselanordnung 20, auszustatten, um so eine elektropneumatische Feststellbremseinheit 1 gemäß der hierin beschriebenen Erfindung zu erhalten.

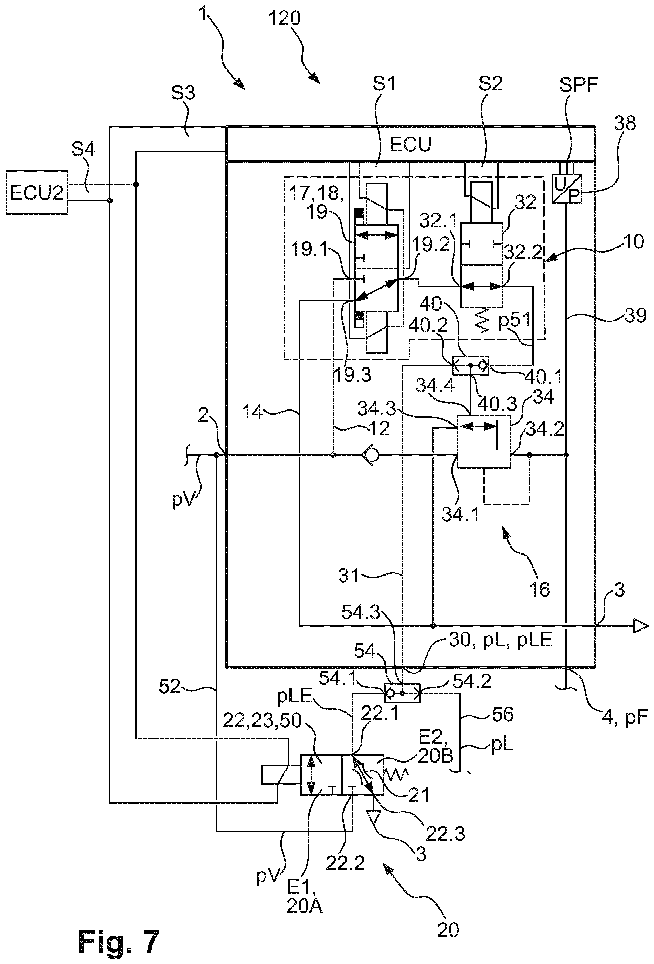

In allen vier noch zu beschreibenden Ausführungsbeispielen 6, 7, 8 und 9 (Fig. 7 bis 10) ist das elektropneumatische Feststellbremsmodul 120 gleich ausgebildet, und zwar im Grunde so, wie bereits mit Bezug auf das erste Ausführungsbeispiel (Fig. 2) beschrieben, wobei jedoch die Drosselanordnung 20 extern zum Feststellbremsmodul 120 angeordnet ist. Das elektropneumatische Feststellbremsmodul 120 wie in den Fig. 7 bis 10 gezeigt ist im Grunde bekannt. Es wird daher auch nicht im Detail beschrieben, sondern für seine Funktionsweise auf die obige Beschreibung Bezug genommen.

Da die Drosselanordnung 20 extern zum elektropneumatischen Feststellbremsmodul 120 angeordnet ist, ist sie auch nicht in den Vorsteuer-Entlüftungspfad 14 eingesetzt. Vielmehr wird in den Ausführungsbeispielen 6 bis 9 (Fig. 7 bis 10) der Löseanschluss 30 auch zum Entlüften der Hauptventileinheit 16 verwendet, für den Fall, dass der beschriebene zweite Fehler F2 auftritt. Zu diesem Zweck ist die Drosselanordnung 20 mit dem Löseanschluss 30 verbunden. Es soll verstanden werden, dass die Drosselanordnung 20 auch gemäß den Ausführungsbeispielen 6 bis 9 (Fig. 7 bis 10) in das elektropneumatische Feststellbremsmodul 120 integriert sein kann, auch wenn sie in den Fig. 7 bis 10 extern zu dieser angeordnet und in Bezug auf eine Entlüftungsrichtung stromabwärts des Löseanschlusses 30 angeordnet ist.

Die Drosselanordnung 20 kann auf diese Weise eine Doppelfunktion einnehmen und nicht nur zur Entlüftung des Federspeicheranschlusses 4 eingesetzt werden, sondern auch zur Belüftung, und kann somit auch die Funktion eines Löseventils 50, wie oben beschrieben, einnehmen.

Die Drosselanordnung 20 weist gemäß dem sechsten Ausführungsbeispiel (Fig. 7) wiederum ein erstes monostabiles Drosselventil 22 auf, das wie im ersten Ausführungsbeispiel (Fig. 2) als 3/2-Wege-Drosselventil 23 ausgebildet ist, mit einer Drossel 21, die im 3/2-Wege-Drosselventil 23 selbst ausgebildet ist. Der dritte Drosselventilanschluss 22.3 ist wiederum mit einer Entlüftung 3 verbunden, wie dies bereits oben mit Bezug auf Fig. 2 beschrieben wurde. Allerdings sind sowohl der erste Drosselanschluss 22.1 als auch der zweite Drosselanschluss 22.2 anders verschaltet. Der zweite Drosselanschluss 22.2 ist hier mit einer Vorratsleitung 52 verbunden, die stromaufwärts des Vorratsanschlusses 2 abzweigt und so den zweiten Drosselventilanschluss 22.2 mit Vorratsdruck pV versorgt. Die Abzweigung stromaufwärts des Vorratsanschlusses 2 ist nur dann notwendig, wenn die Drosselanordnung 20 nicht in die Feststellbremseinheit 120 integriert ist, wie in Fig. 7 dargestellt. Für den Fall, dass die Drosselanordnung 20 in das Feststellbremsmodul 120 integriert ist, kann der zweite Drosselventilanschluss 22.2 auch direkt mit dem Vorratsanschluss 2 verbunden sein. Allerdings soll verstanden werden, dass auch die Verbindung des zweiten Drosselventilanschlusses 22.2 mit dem Vorratsanschluss zwar nur optional ist und dieser ebenso auch mit der Entlüftung 3 verbunden sein könnte. Der Vorteil der Verbindung des zweiten Drosselventilanschlusses 22.2 mit der Vorratsleitung 52 bzw. allgemein mit der Versorgung mit Vorratsdruck pV liegt darin, dass so die Drosselanordnung 20 auch zum Belüften des Löseanschlusses 30 verwendet werden kann, zum Aussteuern des elektronisch ausgesteuerten Lösedrucks pLE.

Zu diesem Zweck ist der erste Drosselventilanschluss 22.1 mit dem Löseanschluss 30 verbunden. Zur Steuerung ist das erste monostabile Drosselventil 22 sowohl mit der elektronischen Steuereinheit ECU verbunden und empfängt von dieser ein drittes Schaltsignal S3, wie bereits mit Bezug auf die Fig. 2 bis 6 beschrieben. Zusätzlich ist das erste monostabile Drosselventil 22 auch mit der externen Steuereinheit ECU2 verbunden, um von dieser das vierte Schaltsignal S4 zu erhalten, da - wie beschrieben - das erste monostabile Drosselventil 22 auch zum Belüften des Löseanschlusses 3 verwendet wird, um auf diese Weise den elektronisch ausgesteuerten Lösedruck pLE bereitzustellen.

In einer ersten stromlosen Schaltstellung ist das erste monostabile Drosselventil 22 gemäß Fig. 7 so geschaltet, dass der erste Drosselventilanschluss 22.1 mit dem dritten Drosselventilanschluss 22.3 verbunden ist, wobei zwischen diese Anschlüsse die Drossel 21 geschaltet ist, wie im Grunde bereits mit Bezug auf Fig. 2 beschrieben. In der zweiten, in Fig. 7 nicht gezeigten Schaltstellung hingegen, in der der erste Drosselventilanschluss 22.1 mit dem zweiten Drosselventilanschluss 22.2 verbunden ist, wird Vorratsdruck pV über den ersten Drosselventilanschluss 22.1 an dem Löseanschluss 30 bereitgestellt. Dieser dort bereitgestellte Druck wird dann als elektronisch ausgesteuerter Lösedruck pLE bezeichnet und von dem Löseanschluss 30 ausgehend über die Lösedruckleitung 31 und das erste Wechselventil 40 wie bereits zuvor beschrieben an der Hauptventileinheit 16 bereitgestellt, um so die Aussteuerung des Federspeicherbremsdrucks pF zu bewirken.

Um auch eine manuelle Bereitstellung eines Lösedrucks pL bzw. eine Anti-Compound-Funktion umzusetzen oder den Lösedruck pL von einer anderen Achse VA, HA des Fahrzeugs 200, wie beispielsweise der Vorder- oder Hinterachse VA, HA, abzuzweigen und bereitzustellen, oder um den Lösedruck pL wie bereits zuvor beschrieben von einem weiteren Modul, wie insbesondere Zentralmodul 100, aussteuern zu lassen, ist zwischen den ersten Drosselventilanschluss 22.1 und den Löseanschluss 30 ein zweites Wechselventil 54 geschaltet. Das zweite Wechselventil 54 weist einen vierten Wechselventilanschluss 54.1 auf, der mit dem ersten Drosselventilanschluss 22.1 verbunden ist, sowie einen fünften Wechselventilanschluss 54.2, der mit einer externen Lösedruckleitung 56 verbunden ist, über die der Lösedruck pL von einer externen Einheit oder manuell eingesteuert werden kann. Das zweite Wechselventil 54 steuert dann den jeweils höheren des an dem vierten und fünften Wechselventilanschluss 54.1, 54.2 anliegenden Drucks an einen sechsten Wechselventilanschluss 54.3 aus, der mit dem Löseanschluss 30 verbunden ist.

Um nun für den Fall, dass ein zweiter Fehler auftritt, der ein Betätigen der elektronischen Steuereinheit ECU unmöglich macht, eine Entlüftung über den gedrosselten Entlüftungspfad E2 zu realisieren, muss zunächst verstanden werden, dass im Allgemeinen der erste Steuerdruck pS1, der an dem ersten Wechselventilanschluss 40.1 anliegt, höher ist als der Druck, der am zweiten Wechselventilanschluss 40.2 anliegt. Im Redundanzfall, wenn bereits die externe elektronische Steuereinheit ECU2 ausgefallen ist, wird auch kein viertes Schaltsignal S4 mehr bereitgestellt. Das heißt, das erste monostabile Drosselventil 22 ist in der ersten in Fig. 7 gezeigten Schaltstellung. Wird nun auch aufgrund des zweiten Fehlers F2 das Halteventil 32 stromlos geschaltet, da das zweite Schaltsignal S2 wegfällt, ist es erforderlich, das erste Wechselventil 40 so zu gestalten, dass der an dem Relaisventil-Steueranschluss 34.4 anliegende Druck über den zweiten Wechselventilanschluss 40.2 entlüftet werden kann, um so den Entlüftungspfad von dem Relaisventil-Steueranschluss 34.4 über den Löseanschluss 30, das zweite Wechselventil 54 und die Drosselanordnung 20 über den gedrosselten Entlüftungspfad E2 zu realisieren. Dies kann einerseits dadurch gelöst werden, dass das erste Wechselventil 40 in diese Stellung vorgespannt ist, andererseits auch dadurch, dass über die externe Löseleitung 56 ein Lösedruck pL von einer anderen Achse VA, HA kurzzeitig bereitgestellt wird, um das erste Wechselventil 40 in die entsprechende Schaltstellung zu bringen.

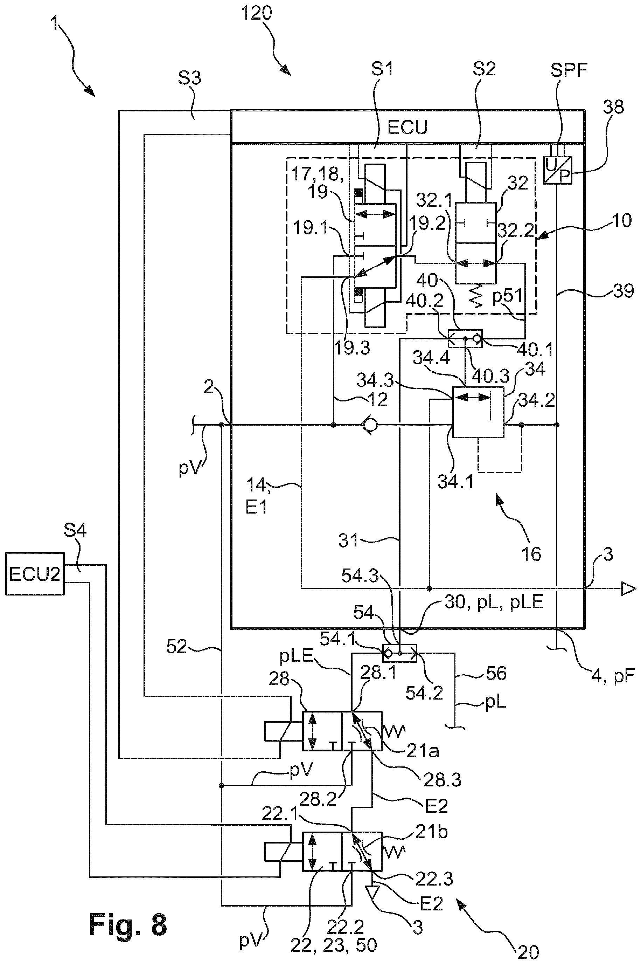

Das siebte Ausführungsbeispiel (Fig. 8) basiert wiederum im Wesentlichen auf dem sechsten Ausführungsbeispiel (Fig. 7), sodass gleiche und ähnliche Elemente mit gleichen Bezugszeichen versehen sind und vollumfänglich auf die obige Beschreibung Bezug genommen wird. Wiederum werden im Folgenden insbesondere die Unterschiede zum sechsten Ausführungsbeispiel (Fig. 7) hervorgehoben.

Auch im siebten Ausführungsbeispiel (Fig. 8) ist die Drosselanordnung 20 extern zum elektropneumatischen Feststellbremsmodul 120 angeordnet, und insbesondere in Entlüftungsrichtung stromabwärts des Löseanschlusses 30. Im Unterschied zum sechsten Ausführungsbeispiel (Fig. 7) umfasst die Drosselanordnung 20 neben dem ersten monostabilen Drosselventil 22 auch ein zweites monostabiles Drosselventil 28. Das erste monostabile Drosselventil 22, welches wiederum als 3/2-Wege-Drosselventil 23 ausgebildet ist und auch die Funktion eines Löseventils 50 einnimmt, ist in ähnlicher Weise verschaltet wie im sechsten Ausführungsbeispiel (Fig. 7). Der dritte Drosselventilanschluss 22.3 ist wiederum mit einer Entlüftung 3 verbunden und der zweite Drosselventilanschluss 22.2 mit der Vorratsleitung 52 zum Empfangen von Vorratsdruck pV. Der erste Drosselventilanschluss 22.1 führt zum Löseanschluss 30, wiederum unter Zwischenschaltung des zweiten Wechselventils 54. Im Unterschied zum sechsten Ausführungsbeispiel (Fig. 7) ist aber zwischen den ersten Drosselventilanschluss 22.1 und das zweite Wechselventil 54 das zweite monostabile Drosselventil 28 geschaltet. Das zweite monostabile Drosselventil 28 hat einen vierten Drosselventilanschluss 28.1, einen fünften Drosselventilanschluss 28.2 und einen sechsten Drosselventilanschluss 28.3. Das zweite monostabile Drosselventil 28 ist strukturell identisch zu dem ersten monostabilen Drosselventil 22 aufgebaut, dies ist aber nicht erforderlich und es soll verstanden werden, dass sie auch zum Teil unterschiedlich ausgebildet sein können. Der vierte Drosselventilanschluss 28.1 ist hier mit dem zweiten Wechselventil 54 verbunden, kann aber, ebenso wie das bereits mit Bezug auf Fig. 7 beschrieben wurde, auch unmittelbar mit dem Löseanschluss 30 verbunden sein. Der fünfte Drosselventilanschluss 28.2 ist mit der Vorratsleitung 52 verbunden und empfängt ebenso wie der zweite Drosselventilanschluss 22.2 Vorratsdruck pV. Der sechste Drosselventilanschluss 28.3 ist dann hier mit dem ersten monostabilen Drosselventil 22 verbunden, genauer gesagt mit dem ersten Drosselventilanschluss 22.1. In Bezug auf die Entlüftung 3 sind die ersten und zweiten monostabilen Drosselventile 22, 28 also pneumatisch in Reihe geschaltet.

Das erste monostabile Drosselventil 22 wird hier mittels des vierten Schaltsignals S4 von der externen Steuereinheit ECU2 gesteuert. Das zweite monostabile Drosselventil 28 wird von der elektronischen Steuereinheit ECU des Feststellbremsmoduls 120 durch das dritte Schaltsignal S3 gesteuert. Dem zweiten monostabilen Drosselventil 28 kommt hier also im Wesentlichen die Funktion zu, die auch das erste monostabile Drosselventil 22 in vorherigen Ausführungsformen hatte. Allerdings reicht es nicht aus, dass das zweite monostabile Drosselventil 28 stromlos in die in Fig. 8 gezeigte erste Schaltstellung geschaltet wird, um den Löseanschluss 30 und damit den Federspeicheranschluss 4 zu entlüften; vielmehr ist es auch erforderlich, dass das erste monostabile Drosselventil 22 ebenso stromlos geschaltet wird. Nur auf diese Weise, wenn sowohl das erste als auch das zweite monostabile Drosselventil 22, 28 stromlos sind, kann der Löseanschluss 30 mit der Entlüftung 3 verbunden werden. In den beiden anderen jeweils in Fig. 8 nicht gezeigten Schaltstellungen wird sowohl durch das erste als auch durch das zweite monostabile Drosselventil 22, 28 der Vorratsdruck pV durchgesteuert und an dem Löseanschluss 30 bereitgestellt, um so in der Folge den Federspeicherbremsdruck pF auszusteuern.

Durch die Hintereinanderschaltung der ersten und zweiten monostabilen Drosselventile 22, 28 können sich noch zwei weitere Schaltstellungen ergeben. Zum einen sollte im Betrieb das dritte Schaltsignal S3 permanent bereitgestellt werden. In diesem Fall wird über den Löseanschluss 30 der Vorratsdruck pV ausgesteuert und so als elektronisch ausgesteuerter Lösedruck pLE an der Hauptventileinheit 16 bereitgestellt. Hierdurch kann also unabhängig von der Schaltung der Vorsteuereinheit 10 sichergestellt werden, dass Federspeicherbremsdruck pF ausgesteuert ist und die Federspeicherbremszylinder 8a, 8b gelöst sind. Hierdurch wird schon eine erste Redundanzebene eingezogen, nämlich die, dass der Federspeicherbremsdruck pF immer dann bereitgestellt wird, wenn einer der beiden aus Vorsteuereinheit 10 und zweitem monostabilen Drosselventil 28 funktionieren. Fällt jedoch die elektronische Steuereinheit ECU aus, wird auch das dritte Schaltsignal S3 nicht mehr bereitgestellt. In diesem Fall fällt das zweite monostabile Drosselventil 28 in die in Fig. 8 gezeigte Schaltstellung zurück. Gleichzeitig kann aber die externe Steuereinheit ECU2, sofern diese funktionsfähig ist, nach wie vor das vierte Schaltsignal S4 bereitstellen und das erste monostabile Drosselventil 22 in die in Fig. 8 nicht gezeigte zweite Schaltstellung schalten, in der dann an dem ersten Drosselventilanschluss 22.1 der Vorratsdruck pV ausgesteuert wird. Dieser wird dann über den sechsten Drosselventilanschluss 28.3 und den vierten Drosselventilanschluss 28.1 (gedrosselt) an dem Löseanschluss 30 ausgesteuert, sodass wiederum Federspeicherbremsdruck pF ausgesteuert werden kann.

Sowohl das erste als auch das zweite monostabile Drosselventil 22, 28 weisen hier integrierte Drossel 21a, 21b auf, die gemeinsam den Drosselungsgrad G für die gedrosselte Entlüftung des Federspeicheranschlusses 4 bilden.

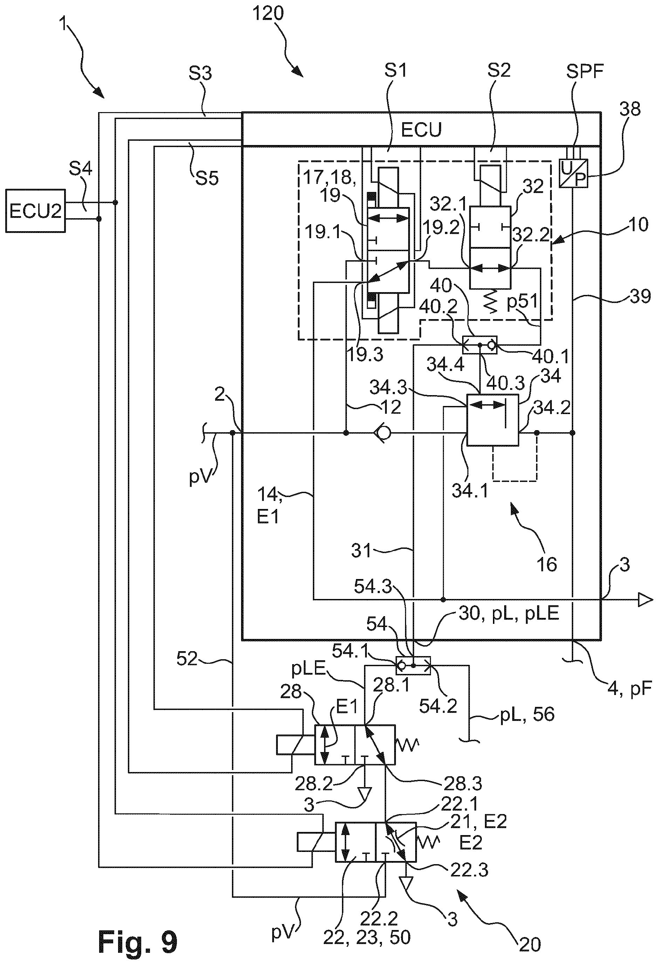

Das achte Ausführungsbeispiel (Fig. 9) umfasst wiederum die Drosselanordnung 20, sowie ein erstes und ein zweites monostabiles Drosselventil 22, 28, die allerdings etwas anders verschaltet sind als in dem siebten Ausführungsbeispiel (Fig. 8). Im Folgenden werden wiederum gleiche und ähnliche Elemente mit gleichen Bezugszeichen versehen und daher wird vollumfänglich auf die obige Beschreibung Bezug genommen. Die nachfolgende Beschreibung des achten Ausführungsbeispiels hebt insbesondere die Unterschiede zum siebten Ausführungsbeispiel (Fig. 8) hervor.

Ein erster Unterschied im achten Ausführungsbeispiel (Fig. 9) mit Bezug zum siebten Ausführungsbeispiel (Fig. 8) liegt darin, dass das zweite Drosselventil 28 selbst keine Drossel 21a aufweist, wie dies noch im siebten Ausführungsbeispiel der Fall war. Eine Drossel 21 ist hier im ersten Drosselventil 22 ausgebildet, welches identisch zu dem monostabilen Drosselventil 22 der Fig. 8 ausgebildet ist. Auch in dem achten Ausführungsbeispiel (Fig. 9) ist der dritte Drosselventilanschluss 22.3 mit der Entlüftung 3 verbunden, der zweite Drosselventilanschluss 22.2 mit der Vorratsleitung 52, um Vorratsdruck pV zu empfangen, und der erste Drosselventilanschluss 22.1 mit dem zweiten monostabilen Drosselventil 28, hier genauer gesagt mit dem sechsten Drosselventilanschluss 28.3. Im Unterschied zum siebten Ausführungsbeispiel (Fig. 8) ist der fünfte Drosselventilanschluss 28.2 allerdings nicht mit der Vorratsleitung 52 verbunden, sondern mit einer Entlüftung 3. Das heißt, bei Schalten des zweiten monostabilen Drosselventils 28 von der ersten in Fig. 9 gezeigten Schaltstellung in die zweite in Fig. 9 nicht gezeigte Schaltstellung wird nicht, wie dies im siebten Ausführungsbeispiel (Fig. 8) der Fall war, Vorratsdruck pV über das zweite monostabile Drosselventil 28 an dem zweiten Wechselventil 54 bereitgestellt, vielmehr wird das zweite Wechselventil 54 entlüftet. Da das zweite monostabile Drosselventil 28 keine Drossel umfasst, kann auf diese Weise eine ungedrosselte Entlüftung des Löseanschlusses 30 und damit auch eine ungedrosselte Entlüftung des Federspeicheranschlusses 4 über den Löseanschluss 30 erreicht werden. Eine ungedrosselte Entlüftung ist hingegen im siebten Ausführungsbeispiel (Fig. 8) nur über die Entlüftung 3 möglich, die an dem elektropneumatischen Feststellbremsmodul 120 angeordnet ist, das heißt, über den Vorsteuer-Entlüftungspfad 14. Die Drosselanordnung 20 erlaubt in dem siebten Ausführungsbeispiel (Fig. 8) keine ungedrosselte Entlüftung.

Ein weiterer Unterschied liegt darin, dass das erste monostabile Drosselventil 22 sowohl mit der elektronischen Steuereinheit ECU des Feststellbremsmoduls 120 verbunden ist, als auch mit der externen Steuereinheit ECU2. Das erste monostabile Drosselventil 22 dient in dem in Fig. 9 gezeigten achten Ausführungsbeispiel nicht nur als Drosselventil 22, sondern auch als Löseventil 50 und kann daher von der externen Steuereinheit ECU2 gesteuert werden. Wenn das erste monostabile Drosselventil 22 in die zweite in Fig. 9 nicht gezeigte Schaltstellung geschaltet wird, wird der zweite Drosselventilanschluss 22.2 mit dem ersten Drosselventilanschluss 22.1 verbunden und der Vorratsdruck pV durch das erste monostabile Drosselventil 22 hindurchgesteuert. Das zweite monostabile Drosselventil 28 sollte in diesem Zustand stromlos geschaltet und in der ersten in Fig. 9 gezeigten Schaltstellung sein, sodass der Vorratsdruck pV auch durch dieses hindurchgesteuert werden kann, um als elektronisch ausgesteuerter Lösedruck pLE an dem vierten Wechselventilanschluss 54.1 bereitgestellt zu werden, um über dieses dann am Löseanschluss 30 und schließlich an dem Relaisventil-Steueranschluss 34.4 ausgesteuert zu werden, um die Aussteuerung des Federspeicherbremsdrucks pF zu veranlassen. Das zweite monostabile Drosselventil 28 wird dann in die zweite in Fig. 9 nicht gezeigte Schaltstellung geschaltet, wenn der Löseanschluss 30 ungedrosselt entlüftet werden soll. Zu diesem Zweck ist das zweite monostabile Drosselventil 28 in dem in Fig. 9 gezeigten achten Ausführungsbeispiel von der elektronischen Steuereinheit ECU steuerbar, und zwar mittels eines fünften Schaltsignals S5.

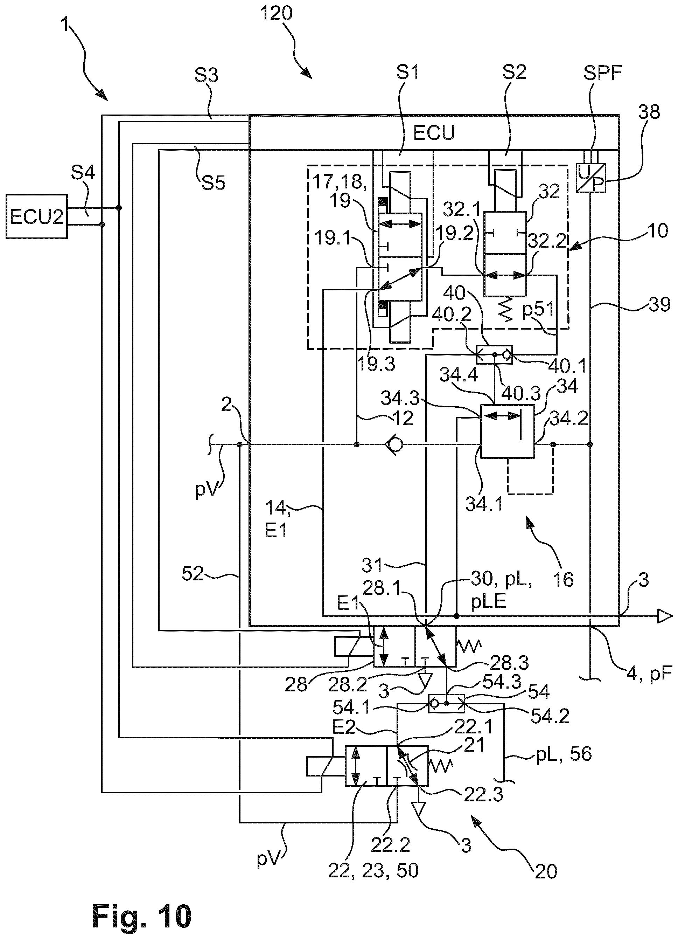

Im neunten Ausführungsbeispiel (Fig. 10) sind wiederum gleiche und ähnliche Elemente mit gleichen Bezugszeichen versehen, sodass vollumfänglich auf die obige Beschreibung Bezug genommen wird. Auch im neunten Ausführungsbeispiel werden insbesondere die Unterschiede zum vorherigen Ausführungsbeispiel beschrieben. Das neunte Ausführungsbeispiel basiert im Wesentlichen auf dem achten Ausführungsbeispiel (Fig. 9), sodass die Unterschiede gegenüber diesem beschrieben werden.

Ein erster Unterschied im neunten Ausführungsbeispiel in Bezug auf das achte Ausführungsbeispiel (Fig. 9) liegt darin, dass pneumatisch gesehen die Position des zweiten Drosselventils 28 und des zweiten Wechselventils 54 vertauscht sind. Konkret bedeutet dies, dass der Löseanschluss 30 nicht mit dem sechsten Wechselventilanschluss 54.3, sondern mit dem vierten Drosselventilanschluss 28.1 verbunden ist. Der sechste Wechselventilanschluss 54.3 ist dann seinerseits mit dem sechsten Drosselventilanschluss 28.3 verbunden. Der fünfte Wechselventilanschluss 54.2 ist wiederum mit einer Entlüftung 3 verbunden, wie dies bereits im achten Ausführungsbeispiel (Fig. 9) beschrieben wurde. Diese Vertauschung hat zur Folge, dass eine ungedrosselte Entlüftung über das zweite Drosselventil 28 nicht auch zwingend über das zweite Wechselventil 54 laufen muss, wie dies im achten Ausführungsbeispiel (Fig. 9) der Fall ist. Die gedrosselte Entlüftung über den gedrosselten Entlüftungspfad E2 sowie das Nutzen des ersten Drosselventils 22 als Löseventil 50 funktioniert ebenso wie im achten Ausführungsbeispiel (Fig. 9).

Ein Unterschied besteht allerdings darin, wenn der Lösedruck pL manuell über die externe Lösedruckleitung 56 eingesteuert wird. Um diesen an den Löseanschluss 30 aussteuern zu können, ist es erforderlich, dass das zweite Drosselventil 28 stromlos geschaltet ist und in der in Fig. 10 gezeigten ersten Schaltstellung ist.

### Bezugszeichenliste (Teil der Beschreibung)

- 1: Feststellbremsventilanordnung
- 2: Vorratsanschluss
- 3: Entlüftung
- 4: Federspeicheranschluss
- 8a, 8b: Federspeicherbremszylinder
- 10: Vorsteuereinheit
- 12: Vorsteuer-Belüftungspfad
- 14: Vorsteuer-Entlüftungspfad
- 16: Hauptventileinheit
- 17: Einlass-Auslass-Ventil
- 18: 3/2-Wege-Einlass-Auslass-Ventil
- 19: Bistabilventil
- 19.1: erster Bistabilventilanschluss
- 19.2: zweiter Bistabilventilanschluss
- 19.3: dritter Bistabilventilanschluss
- 20: Drosselanordnung
- 21: erste Drossel
- 22: erste monostabile Drosselventil
- 22.1: erster Drosselventilanschluss
- 22.2: zweiter Drosselventilanschluss
- 22.3: dritter Drosselventilanschluss
- 23: 3/2-Wege-Drosselventil
- 24: 2/2-Wege-Drosselventil
- 26: einstellbare Drossel
- 28: zweites monostabiles Drosselventil
- 30: Löseanschluss
- 31: Lösedruckleitung
- 32: Halteventil
- 32.1: erster Halteventilanschluss
- 32.2: zweiter Halteventilanschluss
- 34: Relaisventil
- 34.1: Relaisventil-Vorratsanschluss
- 34.2: Relaisventil-Arbeitsanschluss
- 34.3: Relaisventil-Entlüftungsanschluss
- 34.4: Relaisventil-Steueranschluss
- 36.1: erstes Leitungsstück
- 36.2: zweites Leitungsstück
- 36.3: Verbindungsknoten
- 38: Drucksensor
- 39: Druckmessleitung
- 40: erstes Wechselventil
- 40.1: erster Wechselventilanschluss
- 40.2: zweiter Wechselventilanschluss
- 40.3: dritter Wechselventilanschluss
- 42: Monostabiles 3/2-Wege-Einlass-Auslass-Ventil
- 42.1: erster 3/2-Wegeventil-Anschluss
- 42.2: zweiter 3/2-Wegeventil-Anschluss
- 42.3: dritter 3/2-Wegeventil-Anschluss
- 50: Löseventil
- 50.1: erster Löseventilanschluss
- 50.2: zweiter Löseventilanschluss
- 50.3: dritter Löseventilanschluss
- 52: Vorratsleitung
- 54: zweites Wechselventil
- 54.1: vierter Wechselventilanschluss
- 54.2: fünfter Wechselventilanschluss
- 54.3: sechster Wechselventilanschluss
- 56: Externe Lösedruckleitung
- 100: Zentralmodul
- 102: Einheit für autonomes Fahren
- 104: Vorderachsmodulator
- 106a, 106b: Vorderachsbremsaktuatoren
- 108a, 108b: Hinterachsbremsaktuatoren
- 110: Bremswertgeber
- 112: erste elektrische Bremswertgeberleitung
- 114: zweite elektrische Bremswertgeberleitung
- 200: Fahrzeug
- 202: Nutzfahrzeug
- 206: elektronisch steuerbares pneumatisches Bremssystem
- 208: Betriebsbremssystem
- 210: Redundanzsystem
- 212: Fahrzeugbus
- 214: Vorderachsbremskreis
- 216: Hinterachsbremskreis
- 218: Parkbremskreis
- 120: elektropneumatisches Feststellbremsmodul
- 122: erste Energiequelle
- 124: zweite Energiequelle
- 126: Vorderachs-Redundanzdruckleitung
- 128: Vorderachs-Wechselventil
- E1: ungedrosselter Entlüftungspfad
- E2: gedrosselter Entlüftungspfad
- ECU: Elektronische Steuereinheit
- ECU2: Externe elektronische Steuereinheit
- F1: erster Fehler
- F2: zweiter Fehler
- pBST: pneumatischer Bremswertgeberdruck
- pBVA: Vorderachsbremsdruck
- pBHA: Hinterachsbremsdruck
- pF: Federspeicherbremsdruck
- pL: Lösedruck
- pLE: Elektronisch ausgesteuerter Lösedruck
- pRVA: Vorderachsredundanzdruck
- pS1: erster Steuerdruck
- pV: Vorratsdruck
- HA: Hinterachse
- S1: erstes Schaltsignal
- S2: zweites Schaltsignal
- S3: drittes Schaltsignal
- S4: viertes Schaltsignal
- S5: fünftes Schaltsignal
- SBST: Bremswertgebersignal
- SBVA: Vorderachsbremssignal
- SD: elektronisches Drosselsignal
- SPF: Federspeicherbremsdrucksignal
- VA: Vorderachse
- XBR: Bremsanforderungssignal

## Patentansprüche

1. Verfahren zum sicheren Notstoppen eines Fahrzeugs (200), insbesondere Nutzfahrzeugs (202), mit einem elektronisch steuerbaren pneumatischen Bremssystem (206) mit Federspeicherbremszylindern (8a, 8b) an wenigstens einer Achse (HA), wobei das elektronisch steuerbare pneumatische Bremssystem (206) ein Betriebsbremssystem (208) und wenigstens ein erstes Redundanzsystem (210) aufweist, wobei im Falle eines ersten Fehlers (F1) in dem Betriebsbremssystem (208) das Fahrzeug (200) durch das Redundanzsystem (210) gebremst wird, wobei das elektronisch steuerbare Bremssystem ferner einen ungedrosselten Entlüftungspfad (E1) und einen gegenüber diesem gedrosselten Entlüftungspfad (E2) zum Entlüften der Federspeicherbremszylindern (8a, 8b) aufweist,
**dadurch gekennzeichnet, dass**
das Verfahren die Schritte aufweist:
- Ermitteln eines zweiten Fehlers (F2) in dem Redundanzsystem (210), und
- in Antwort auf das Ermitteln des zweiten Fehlers (F2): automatisiertes gedrosseltes Entlüften von wenigstens einem der Federspeicherbremszylinder (8a, 8b) über den gedrosselten Entlüftungspfad (E2) zum langsamen, sicheren Stoppen des Fahrzeugs (200).

2. Verfahren nach Anspruch 1, wobei das automatisierte gedrosselte Entlüften umfasst: Stromlosschalten (S3) von wenigsten einem monostabilen Ventil (22, 28).

3. Verfahren nach einem der vorstehenden Ansprüche, wobei das Betriebsbremssystem (208) des elektronisch steuerbaren pneumatischen Bremssystems (206) mittels eines Zentralmoduls (100) und das Redundanzsystem (210) des elektronisch steuerbaren pneumatischen Bremssystems (206) mittels einer Feststellbremseinheit (1), welche pneumatisch mit den Federspeicherbremszylindern (8a, 8b) verbunden ist, gesteuert wird.

4. Verfahren nach Anspruch 3, wobei
- in einem Betriebsfall, in dem kein Fehler vorliegt, die Feststellbremseinheit (1) die Federspeicherbremszylinder (8a, 8b) zum Lösen belüftet;
- in einem ersten Redundanzfall, wenn in dem Betriebsbremssystem (208) ein erster Fehler (F1) vorliegt, die Feststellbremseinheit (1) die Steuerung des elektronisch steuerbaren pneumatischen Bremssystems (206) übernimmt; und
- in einem Mehrfachfehlerfall, wenn in dem Betriebsbremssystem (208) ein erster Fehler (F1) und in dem ersten Redundanzsystem (210) ein zweiter Fehler (F2) vorliegt, die Federspeicherbremszylinder (8a, 8b) automatisiert gedrosselt entlüftet werden.

5. Verfahren nach Anspruch 3 oder 4, wobei für den Fall, dass das elektronisch steuerbare pneumatische Bremssystem (206) ein zweites Redundanzsystem aufweist, die Feststellbremseinheit (1) die Federspeicherbremszylinder (8a, 8b) erst dann automatisiert gedrosselt entlüftet, wenn zu den ersten und zweiten Fehlern (F1, F2) auch in dem zweiten Redundanzsystem ein dritter Fehler auftritt.

6. Verfahren nach einem der Ansprüche 3 bis 5, wobei für den Fall, dass zuerst der zweite Fehler (F2) in dem ersten Redundanzsystem (210) auftritt und infolgedessen die Feststellbremseinheit (1) ein oder mehrere monostabile Ventile (10, 20) stromlos schaltet, sodass die Federspeicherbremszylinder (8a, 8b) entlüftet werden, eine weitere Einheit (100), vorzugsweise das Zentralmodul (100), eine Belüftung der Federspeicherbremszylinder (8a, 8b) veranlasst.

7. Verfahren nach Anspruch 6, wobei das Belüften der Federspeicherbremszylinder (8a, 8b) durch die weitere Einheit (100) mittels eines Löseanschlusses (30) an der Feststellbremseinheit (1) umgesetzt wird.

8. Verfahren nach einem der vorstehenden Ansprüche, umfassend der Schritt:
- Einstellen eines Drosselungsgrads (G) des gedrosselten Entlüftungspfads (E2) während das elektronisch steuerbare pneumatische Bremssystem (206) von dem Betriebsbremssystem (208) gesteuert wird.

9. Verfahren nach Anspruch 8, wobei das Einstellen des Drosselungsgrads (G) in Abhängigkeit von über einen Fahrzeugbus (212) und/oder von dem elektronisch steuerbaren pneumatischen Bremssystem (206) bereitgestellten Daten (ST), und/oder in Abhängigkeit von einem Fahrzeugtyp (SF), eines Beladungszustands (SZ), einer Achslast (SA), einer Fahrzeugmasse (SM) oder einer Bremsverteilung (SBV) erfolgt.

10. Elektropneumatische Feststellbremseinheit (1), vorzugsweise elektropneumatisches Feststellbremsmodul (120), zur Verwendung in einem Verfahren nach einem der vorstehenden Ansprüche zum automatisierten gedrosselten Entlüften wenigstens eines Federspeicherbremszylinders (8a, 8b) in einem Fehlerfall (F1, F2), aufweisend:
einen Vorratsanschluss (2) zum Empfangen von Vorratsdruck (pV),
einen Federspeicheranschluss (4) zum Anschließen wenigstens eines Federspeicherbremszylinders (8a, 8b),
**gekennzeichnet durch**
eine Vorsteuereinheit (10) zum Bereitstellen eines ersten Steuerdrucks (pS1), die einen mit dem Vorratsanschluss (2) verbundenen und Vorratsdruck (pV) empfangenden Vorsteuer-Belüftungspfad (12) und einen mit einem Entlüftungsanschluss (3) verbundenen Vorsteuer-Entlüftungspfad (14) aufweist,
und eine den ersten Steuerdruck (pS1) empfangende Hauptventileinheit (16), die dazu ausgebildet ist, in Abhängigkeit von dem empfangenen ersten Steuerdruck (pS1), einen Federspeicherbremsdruck (pF) an dem Federspeicheranschluss (4) bereitzustellen,
wobei eine monostabile Drosselanordnung (20), die bestromt in einer ersten Schaltstellung (20A) gehalten wird, die eine ungedrosselte Entlüftung des Federspeicheranschlusses (4) über einen ungedrosselten Entlüftungspfad (E1) erlaubt, und stromlos in eine zweite Schaltstellung (20B) fällt, die eine gedrosselte Entlüftung des Federspeicheranschlusses (4) über einen gedrosselten Entlüftungspfad (E2) erlaubt.

11. Elektropneumatische Feststellbremseinheit (1) nach Anspruch 10, wobei die Drosselanordnung (20) in dem Vorsteuer-Entlüftungspfad (14) angeordnet ist.

12. Elektropneumatische Feststellbremseinheit (1) nach Anspruch 10 oder 11, wobei die Drosselanordnung (20) ein erstes monostabiles Drosselventil (22) aufweist, welches in der ersten Schaltstellung (20A) der Drosselanordnung (20) offen ist, und in der zweiten Schaltstellung (20B) der Drosselanordnung (20) gedrosselt offen ist.

13. Elektropneumatische Feststellbremseinheit (1) nach einem der Ansprüche 10 bis 12, wobei das erste monostabile Drosselventil (22) als 2/2-Wege-Drosselventil (24) oder als 3/2-Wege-Drosselventil (23) ausgebildet ist.

14. Elektropneumatische Feststellbremseinheit (1) nach einem der Ansprüche 10 bis 13, wobei die Drosselanordnung (20) eine einstellbare Drossel (26) aufweist, welche mittels eines elektronischen Drosselsignals (SD) einstellbar ist.

15. Elektropneumatische Feststellbremseinheit (1) nach einem der Ansprüche 10 bis 14, aufweisend einen Löseanschluss (30) zum Einsteuern eines Lösedrucks (pL), wobei der Löseanschluss (30) mit der Hauptventileinheit (16) verbunden ist, und wobei die Hauptventileinheit (16) dazu ausgebildet ist, in Abhängigkeit von dem empfangenen Lösedruck (pL) einen Federspeicherbremsdruck (pF) an dem Federspeicheranschluss (4) bereitzustellen.

16. Elektropneumatische Feststellbremseinheit (1) nach Anspruch 15, wobei die Drosselanordnung (20) mit dem Löseanschluss (30) verbunden ist, zum gedrosselten Entlüften des Federspeicheranschlusses (4).

17. Elektropneumatische Feststellbremseinheit (1) nach Anspruch 15 oder 16, wobei zwischen den Löseanschluss (30) und die Hauptventileinheit (16) ein erstes Wechselventil (40) geschaltet ist.

18. Elektropneumatische Feststellbremseinheit (1) nach einem der Ansprüche 10 bis 17, aufweisend eine elektronische Steuereinheit (ECU) zum Bereitstellen von Schaltsignalen (S1, S2, S3), wenigstens für die Vorsteuereinheit (10) und die Drosselanordnung (20).

19. Elektropneumatische Feststellbremseinheit (1) nach einem der Ansprüche 10 bis 18, aufweisend ein elektronisch schaltbares Löseventil (50) zum elektronischen Aussteuern eines elektronisch ausgesteuerten Lösedrucks (pLE) an der Hauptventileinheit (16), wobei das Löseventil (50) von einer externen elektronischen Steuereinheit (ECU2) gesteuert wird, die unabhängig von der elektronischen Steuereinheit (ECU) ist.

20. Elektropneumatische Feststellbremseinheit (1) nach Anspruch 12 und 19, wobei das erste monostabile Drosselventil (22) und das Löseventil (50) in ein Kombiventil (52) integriert sind.

21. Elektropneumatische Feststellbremseinheit (1) nach Anspruch 12, wobei die Drosselanordnung (20) ein zweites monostabiles Drosselventil (28) aufweist, welches mit dem ersten monostabilen Drosselventil (22) zur automatischen gedrosselten Entlüftung des Federspeicheranschlusses (4) zusammenwirkt.

22. Elektropneumatische Feststellbremseinheit (1) nach Anspruch 21, wobei eine gedrosselte Entlüftung des Federspeicheranschlusses (4) mittels der Drosselanordnung (20) nur dann möglich ist, wenn das erste und das zweite monostabile Drosselventil (22, 28) stromlos sind.

23. Elektropneumatische Feststellbremseinheit (1) nach Anspruch 21 oder 22, wobei das zweite monostabile Drosselventil (28) von der elektronischen Steuereinheit (ECU) steuerbar ist.

24. Elektropneumatische Feststellbremseinheit (1) nach einem der Ansprüche 10 bis 12, wobei die Vorsteuereinheit (10), die Hauptventileinheit (16) und die elektronische Steuereinheit (ECU) gemeinsam in ein Feststellbremsmodul (120) integriert sind.

25. Elektronisch steuerbares pneumatischen Bremssystem (206) mit Federspeicherbremszylindern (8a, 8b) an wenigstens einer Achse (HA) eines Fahrzeugs (200), insbesondere Nutzfahrzeug (202), wobei das elektronisch steuerbare pneumatische Bremssystem (206) ein Betriebsbremssystem (208) und wenigstens ein erstes Redundanzsystem (210) aufweist, wobei im Falle eines ersten Fehlers (F1) in dem Betriebsbremssystem (208) das Fahrzeug (200) durch das Redundanzsystem (210) gebremst wird, und eine elektropneumatische Feststellbremseinheit (1) nach einem der Ansprüche 10 bis 23.

26. Elektronisch steuerbares pneumatischen Bremssystem (206) nach Anspruch 25, wobei der Löseanschluss (30) mit einem Vorderachsbremskreis (214) und/oder einem Hinterachsbremskreis (216) verbunden ist.

27. Fahrzeug (200), insbesondere Nutzfahrzeug (202), mit einem elektronisch steuerbaren pneumatischen Bremssystem (206) nach Anspruch 25 oder 26.

## Claims

1. Method for the safe emergency stopping of a vehicle (200), in particular a utility vehicle (202), comprising an electronically controllable pneumatic brake system (206) having spring brake cylinders (8a, 8b) on at least one axle (HA), the electronically controllable pneumatic brake system (206) comprising a service brake system (208) and at least a first redundancy system (210), the vehicle (200) being braked by the redundancy system (210) in the event of a first fault (F1) in the service brake system (208), the electronically controllable brake system further comprising an unthrottled vent path (E1) and a vent path (E2) which is throttled in comparison with the unthrottled vent path and is intended for venting the spring brake cylinders (8a, 8b),
**characterized in that**
the method comprises the steps of:
- determining a second fault (F2) in the redundancy system (210), and
- in response to determining the second fault (F2): automated throttled venting of at least one of the spring brake cylinders (8a, 8b) via the throttled vent path (E2) for slow, safe stopping of the vehicle (200).

2. Method according to claim 1, wherein the automated throttled venting includes: deenergizing (S3) at least one monostable valve (22, 28).

3. Method according to either of the preceding claims, wherein the service brake system (208) of the electronically controllable pneumatic brake system (206) is controlled by means of a central module (100) and the redundancy system (210) of the electronically controllable pneumatic brake system (206) is controlled by means of a parking brake unit (1) which is pneumatically connected to the spring brake cylinders (8a, 8b).

4. Method according to claim 3, wherein
- in an operating case in which no fault is present, the parking brake unit (1) ventilates the spring brake cylinder (8a, 8b) to release said cylinder;
- in a first redundancy case when a first fault (F1) is present in the service brake system (208), the parking brake unit (1) takes over the control of the electronically controllable pneumatic brake system (206); and - in a multi-fault case when a first fault (F1) is present in the service brake system (208) and a second fault (F2) is present in the first redundancy system (210), the spring brake cylinders (8a, 8b) are vented in an automated and throttled manner.

5. Method according to either claim 3 or claim 4, wherein, in the event that the electronically controllable pneumatic brake system (206) comprises a second redundancy system, the parking brake unit (1) vents the spring brake cylinder (8a, 8b) in an automated and throttled manner only if, in addition to the first and the second fault (F1, F2), a third fault also occurs in the second redundancy system.

6. Method according to any of claims 3 to 5, wherein, in the event that first the second fault (F2) in the first redundancy system (210) occurs and as a result the parking braking unit (1) deenergizes one or more monostable valves (10, 20) such that the spring brake cylinders (8a, 8b) are vented, a further unit (100), preferably the central module (100), causes ventilation of the spring brake cylinders (8a, 8b).

7. Method according to claim 6, wherein the ventilation of the spring brake cylinders (8a, 8b) by the further unit (100) is implemented by means of a release port (30) on the parking brake unit (1).

8. Method according to any of the preceding claims, including the step of:
- setting a degree of throttling (G) of the throttled vent path (E2) while the electronically controllable pneumatic brake system (206) is controlled by the service brake system (208).

9. Method according to claim 8, wherein the degree of throttling (G) is set on the basis of data (ST) provided via a vehicle bus (212) and/or by the electronically controllable pneumatic brake system (206), and/or on the basis of a vehicle type (SF), a load state (SZ), an axle load (SA), a vehicle mass (SM) or a brake distribution (SBV).

10. Electropneumatic parking brake unit (1), preferably an electropneumatic parking brake module (120), for use in a method according to any of the preceding claims for the automated throttled venting of at least one spring brake cylinder (8a, 8b) in the event of a fault (F1, F2), comprising:
a supply port (2) for receiving supply pressure (pV),
a spring brake port (4) for connecting at least one spring brake cylinder (8a, 8b),
**characterized by**
a pilot-control unit (10) for providing a first control pressure (pS1), which unit comprises a pilot-control ventilation path (12) that is connected to the supply port (2) and receives supply pressure (pV), and a pilot-control vent path (14) connected to a vent port (3),
and a main valve unit (16) which receives the first control pressure (pS1) and is designed to provide a spring brake pressure (pF) at the spring brake port (4) on the basis of the received first control pressure (pS1),
a monostable throttle arrangement (20), which is kept energized in a first switching position (20A) that allows unthrottled venting of the spring brake port (4) via an unthrottled vent path (E1), and when deenergized falls into a second switching position (20B) that allows throttled venting of the spring brake port (4) via a throttled vent path (E2).

11. Electropneumatic parking brake unit (1) according to claim 10, wherein the throttle arrangement (20) is arranged in the pilot-control vent path (14).

12. Electropneumatic parking brake unit (1) according to either claim 10 or claim 11, wherein the throttle arrangement (20) comprises a first monostable throttle valve (22) which is open in the first switching position (20A) of the throttle arrangement (20), and is open in a throttled manner in the second switching position (20B) of the throttle arrangement (20).

13. Electropneumatic parking brake unit (1) according to any of claims 10 to 12, wherein the first monostable throttle valve (22) is in the form of a 2/2-way throttle valve (24) or a 3/2-way throttle valve (23).

14. Electropneumatic parking brake unit (1) according to any of claims 10 to 13, wherein the throttle arrangement (20) comprises an adjustable throttle (26) which can be adjusted by means of an electronic throttle signal (SD).

15. Electropneumatic parking brake unit (1) according to any of claims 10 to 14, comprising a release port (30) for applying a release pressure (pL), wherein the release port (30) is connected to the main valve unit (16), and wherein the main valve unit (16) is designed to provide a spring brake pressure (pF) at the spring brake port (4) on the basis of the received release pressure (pL).

16. Electropneumatic parking brake unit (1) according to claim 15, wherein the throttle arrangement (20) is connected to the release port (30) for the throttled venting of the spring brake port (4).

17. Electropneumatic parking brake unit (1) according to either claim 15 or 16, wherein a first shuttle valve (40) is connected between the release port (30) and the main valve unit (16).

18. Electropneumatic parking brake unit (1) according to any of claims 10 to 17, comprising an electronic control unit (ECU) for providing switching signals (S1, S2, S3), at least for the pilot-control unit (10) and the throttle arrangement (20).

19. Electropneumatic parking brake unit (1) according to any of claims 10 to 18, comprising an electronically switchable release valve (50) for electronically modulating an electronically modulated release pressure (pLE) at the main valve unit (16), wherein the release valve (50) is controlled by an external electronic control unit (ECU2) which is independent of the electronic control unit (ECU).

20. Electropneumatic parking brake unit (1) according to claim 12 and 19, wherein the first monostable throttle valve (22) and the release valve (50) are integrated into a combination valve (52).

21. Electropneumatic parking brake unit (1) according to claim 12, wherein the throttle arrangement (20) comprises a second monostable throttle valve (28) which interacts with the first monostable throttle valve (22) for the automatic throttled venting of the spring brake port (4).

22. Electropneumatic parking brake unit (1) according to claim 21, wherein throttled venting of the spring brake port (4) by means of the throttle arrangement (20) is possible only if the first and the second monostable throttle valves (22, 28) are deenergized.

23. Electropneumatic parking brake unit (1) according to either claim 21 or claim 22, wherein the second monostable throttle valve (28) can be controlled by the electronic control unit (ECU).

24. Electropneumatic parking brake unit (1) according to any of claims 10 to 12, wherein the pilot-control unit (10), the main valve unit (16) and the electronic control unit (ECU) are jointly integrated into a parking brake module (120).

25. Electronically controllable pneumatic brake system (206) comprising spring brake cylinders (8a, 8b) on at least one axle (HA) of a vehicle (200), in particular a utility vehicle (202), wherein the electronically controllable pneumatic brake system (206) comprises a service brake system (208) and at least a first redundancy system (210), wherein in the case of a first fault (F1) in the service brake system (208), the vehicle (200) is braked by the redundancy system (210), and an electropneumatic parking brake unit (1) according to any of claims 10 to 23.

26. Electronically controllable pneumatic brake system (206) according to claim 25, wherein the release port (30) is connected to a front axle brake circuit (214) and/or a rear axle brake circuit (216).

27. Vehicle (200), in particular a utility vehicle (202), comprising an electronically controllable pneumatic brake system (206) according to either claim 25 or claim 26.

## Revendications

1. Procédé d'arrêt d'urgence en toute sécurité d'un véhicule (200), en particulier d'un véhicule utilitaire (202), comportant un système de freinage pneumatique (206) à commande électronique comportant des cylindres de frein à accumulateur à ressort (8a, 8b) sur au moins un essieu (HA), dans lequel le système de freinage pneumatique (206) à commande électronique présente un système de freinage de service (208) et au moins un premier système de redondance (210), dans lequel, en cas d'une première erreur (F1) dans le système de freinage de service (208), le véhicule (200) est freiné par le système de redondance (210), dans lequel le système de freinage à commande électronique présente en outre un évent non étranglé (E1) et un évent étranglé (E2) face à celui-ci, pour la ventilation des cylindres de frein à accumulateur à ressort (8a, 8b),
**caractérisé en ce que**
le procédé comprend les étapes suivantes :
- détermination d'une deuxième erreur (F2) dans le système de redondance (210), et
- en réponse à la détermination de la deuxième erreur (F2) : ventilation automatisée et étranglée d'au moins l'un des cylindres de frein à accumulateur à ressort (8a, 8b) par l'intermédiaire de l'évent étranglé (E2) pour l'arrêt lent et sécurisé du véhicule (200).

2. Procédé selon la revendication 1, dans lequel la ventilation automatisée et étranglée comprend : la mise hors tension (S3) d'au moins une valve monostable (22, 28).

3. Procédé selon l'une des revendications précédentes, dans lequel le système de freinage de service (208) du système de freinage pneumatique (206) à commande électronique est commandé au moyen d'un module central (100) et le système de redondance (210) du système de freinage pneumatique (206) à commande électronique est commandé au moyen d'une unité de freinage de stationnement (1) reliée pneumatiquement aux cylindres de frein à accumulateur à ressort (8a, 8b).

4. Procédé selon la revendication 3, dans lequel
- dans un cas de fonctionnement dans lequel il n'existe aucune erreur, l'unité de freinage de stationnement (1) ventile les cylindres de frein à accumulateur à ressort (8a, 8b) pour le relâchement ;
- dans un premier cas de redondance, lorsqu'une première erreur (F1) est présente dans le système de freinage de service (208), l'unité de freinage de stationnement (1) prend en charge la commande du système de freinage pneumatique (206) à commande électronique ; et
- en cas d'erreurs multiples, lorsqu'une première erreur (F1) est présente dans le système de freinage de service (208) et qu'une deuxième erreur (F2) est présente dans le premier système de redondance (210), les cylindres de frein à accumulateur à ressort (8a, 8b) sont ventilés de manière automatisée et étranglée.

5. Procédé selon la revendication 3 ou 4, dans lequel dans le cas où le système de freinage pneumatique (206) à commande électronique présente un second système de redondance, l'unité de freinage de stationnement (1) ne ventile les cylindres de frein à accumulateur à ressort (8a, 8b) de manière automatisée et étranglée que lorsqu'on plus des première et deuxième erreurs (F1, F2), une troisième erreur survient également dans le second système de redondance.

6. Procédé selon l'une des revendications 3 à 5, dans lequel dans le cas où la deuxième erreur (F2) survient d'abord dans le premier système de redondance (210) et l'unité de freinage de stationnement (1) met par conséquent hors tension une ou plusieurs valves monostables (10, 20) de sorte que les cylindres de frein à accumulateur à ressort (8a, 8b) sont ventilés, une unité supplémentaire (100), de préférence le module central (100), provoque une ventilation des cylindres de frein à accumulateur à ressort (8a, 8b).

7. Procédé selon la revendication 6, dans lequel la ventilation des cylindres de frein à accumulateur à ressort (8a, 8b) est réalisée par l'unité supplémentaire (100) au moyen d'un raccord de relâchement (30) au niveau de l'unité de freinage de stationnement (1).

8. Procédé selon l'une des revendications précédentes, comprenant l'étape :
- de réglage d'un degré d'étranglement (G) de l'évent étranglé (E2) pendant que le système de freinage de service (208) commande le système de freinage pneumatique (206) à commande électronique.

9. Procédé selon la revendication 8, dans lequel le réglage du degré d'étranglement (G) est effectué en fonction de données (ST) fournies par l'intermédiaire d'un bus de véhicule (212) et/ou par le système de freinage pneumatique (206) à commande électronique et/ou en fonction d'un type de véhicule (SF), d'un état de chargement (SZ), d'une charge par essieu (SA), d'une masse du véhicule (SM) ou d'une distribution de freinage (SBV).

10. Unité de freinage de stationnement électropneumatique (1), de préférence module de freinage de stationnement électropneumatique (120), destinée à être utilisée dans un procédé selon l'une des revendications précédentes pour la ventilation automatisée et étranglée d'au moins un cylindre de frein à accumulateur à ressort (8a, 8b) dans un cas d'erreur (F1, F2), présentant :
un raccord de réserve (2) destiné à recevoir une pression de réserve (pV),
un raccord d'accumulateur à ressort (4) pour le raccordement d'au moins un cylindre de frein à accumulateur à ressort (8a, 8b),
**caractérisée par**
une unité de commande pilote (10) destinée à fournir une première pression de commande (pS1), l'unité de commande pilote présentant un évent de commande pilote (12) relié au raccord de réserve (2) et recevant la pression de réserve (pV) et un évent de commande pilote (14) relié à un raccord de ventilation (3),
et une unité de valve principale (16) recevant la première pression de commande (pS1), laquelle unité de valve principale est conçue pour appliquer une pression de freinage d'accumulateur à ressort (pF) au raccord d'accumulateur à ressort (4) en fonction de la première pression de commande (pS1) reçue,
dans laquelle un dispositif d'étranglement (20) monostable, maintenu alimenté dans une première position de commutation (20A), permet une ventilation sans étranglement du raccord d'accumulateur à ressort (4) par l'intermédiaire d'un évent non étranglé (E1) et, hors tension dans une seconde position de commutation (20B), permet une ventilation étranglée du raccord d'accumulateur à ressort (4) par l'intermédiaire d'un évent étranglé (E2).

11. Unité de freinage de stationnement électropneumatique (1) selon la revendication 10, dans laquelle le dispositif d'étranglement (20) est disposé dans l'évent de commande pilote (14).

12. Unité de freinage de stationnement électropneumatique (1) selon la revendication 10 ou 11, dans laquelle le dispositif d'étranglement (20) présente une première valve d'étranglement (22) monostable qui est ouverte dans la première position de commutation (20A) du dispositif d'étranglement (20) et est ouverte étranglée dans la seconde position de commutation (20B) du dispositif d'étranglement (20).

13. Unité de freinage de stationnement électropneumatique (1) selon l'une des revendications 10 à 12, dans laquelle la première valve d'étranglement (22) monostable est réalisée sous la forme d'une valve d'étranglement 2/2 voies (24) ou d'une valve d'étranglement 3/2 voies (23).

14. Unité de freinage de stationnement électropneumatique (1) selon l'une des revendications 10 à 13, dans laquelle le dispositif d'étranglement (20) présente un étranglement (26) réglable qui peut être réglé à l'aide d'un signal d'étranglement électronique (SD).

15. Unité de freinage de stationnement électropneumatique (1) selon l'une des revendications 10 à 14, présentant un raccord de relâchement (30) destiné à commander une pression de relâchement (pL), le raccord de relâchement (30) étant relié à l'unité de valve principale (16), et dans laquelle l'unité de valve principale (16) est conçue pour appliquer une pression de freinage d'accumulateur à ressort (pF) au raccord d'accumulateur à ressort (4) en fonction de la pression de relâchement (pL) reçue.

16. Unité de freinage de stationnement électropneumatique (1) selon la revendication 15, dans laquelle le dispositif d'étranglement (20) est relié au raccord de relâchement (30) pour la ventilation étranglée du raccord d'accumulateur à ressort (4).

17. Unité de freinage de stationnement électropneumatique (1) selon la revendication 15 ou 16, dans laquelle une première valve d'inversion (40) est montée entre le raccord de relâchement (30) et l'unité de valve principale (16).

18. Unité de freinage de stationnement électropneumatique (1) selon l'une des revendications 10 à 17, présentant une unité de commande électronique (ECU) destinée à fournir des signaux de commutation (S1, S2, S3), au moins pour l'unité de commande pilote (10) et le dispositif d'étranglement (20).

19. Unité de freinage de stationnement électropneumatique (1) selon l'une des revendications 10 à 18, présentant une valve de relâchement (50) commutable de façon électronique pour la commande électronique d'une pression de relâchement (pLE) commandée électroniquement au niveau de l'unité de valve principale (16), dans laquelle la valve de relâchement (50) est commandée par une unité de commande électronique (ECU2) externe qui ne dépend pas de l'unité de commande électronique (ECU).

20. Unité de freinage de stationnement électropneumatique (1) selon les revendications 12 et 19, dans laquelle la première valve d'étranglement (22) monostable et la valve de relâchement (50) sont intégrées dans une valve combinée (52).

21. Unité de freinage de stationnement électropneumatique (1) selon la revendication 12, dans laquelle le dispositif d'étranglement (20) présente une seconde valve d'étranglement (28) monostable qui coopère avec la première valve d'étranglement (22) monostable pour la ventilation automatique et étranglée du raccord d'accumulateur à ressort (4).

22. Unité de freinage de stationnement électropneumatique (1) selon la revendication 21, dans laquelle une ventilation étranglée du raccord d'accumulateur à ressort (4) n'est possible au moyen du dispositif d'étranglement (20) que lorsque les première et seconde valves d'étranglement (22, 28) monostables sont hors tension.

23. Unité de freinage de stationnement électropneumatique (1) selon la revendication 21 ou 22, dans laquelle la seconde valve d'étranglement (28) monostable peut être commandée par l'unité de commande électronique (ECU).

24. Unité de freinage de stationnement électropneumatique (1) selon l'une des revendications 10 à 12, dans laquelle l'unité de commande pilote (10), l'unité de valve principale (16) et l'unité de commande électronique (ECU) sont intégrées ensemble dans un module de freinage de stationnement (120).

25. Système de freinage pneumatique (206) à commande électronique comportant des cylindres de frein à accumulateur à ressort (8a, 8b) au niveau d'au moins un essieu (HA) d'un véhicule (200), en particulier d'un véhicule utilitaire (202), le système de freinage pneumatique (206) à commande électronique présentant un système de freinage de service (208) et au moins un premier système de redondance (210), dans lequel, en cas d'une première erreur (F1) dans le système de freinage de service (208), le véhicule (200) est freiné par le système de redondance (210) et une unité de freinage de stationnement électropneumatique (1) selon l'une des revendications 10 à 23.

26. Système de freinage pneumatique (206) à commande électronique selon la revendication 25, dans lequel le raccord de relâchement (30) est relié à un circuit de freinage d'essieu avant (214) et/ou un circuit de freinage d'essieu arrière (216).

27. Véhicule (200), en particulier véhicule utilitaire (202), comportant un système de freinage pneumatique (206) à commande électronique selon la revendication 25 ou 26.
